(19) Europäisches Patentamt
European Patent Office
Office européen des brevets

(11) Veröffentlichungsnummer: **0 092 524**
**B1**

(12) **EUROPÄISCHE PATENTSCHRIFT**

(45) Veröffentlichungstag der Patentschrift: **12.08.87**

(51) Int. Cl.$^4$: **C 09 D 3/70**, C 08 L 79/08, G 03 F 7/10

(21) Anmeldenummer: **83810156.6**

(22) Anmeldetag: **15.04.83**

(54) **Strahlungsempfindliches Beschichtungsmittel und seine Verwendung.**

(30) Priorität: **21.04.82 CH 2414/82**

(43) Veröffentlichungstag der Anmeldung: **26.10.83 Patentblatt 83/43**

(45) Bekanntmachung des Hinweises auf die Patenterteilung: **12.08.87 Patentblatt 87/33**

(84) Benannte Vertragsstaaten: **CH DE FR GB IT LI NL SE**

(56) Entgegenhaltungen:
**EP-A-0 065 352**
**FR-A-2 456 339**
**US-A-3 856 752**

**DERWENT JAPANESE PATENTS GAZETTE, Section Ch: Chemical. Woche D17, Zusammenfassung Nr. 30070, G06, 3. Juni 1981, Derwent Publications, LONDON, (GB)**

(73) Patentinhaber: **CIBA- GEIGY AG, Klybeckstrasse 141, CH- 4002 Basel (CH)**

(72) Erfinder: **Rohde, Ottmar, Dr., Bärenfelserstrasse 34, CH- 4057 Basel (CH)**
Erfinder: **Pfeifer, Josef, Dr., Brunnmattstrasse 32, CH- 4106 Therwil (CH)**

**EP 0 092 524 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

**Beschreibung**

Die vorliegende Erfindung betrifft ein strahlungsempfindliches Beschichtungsmittel aus einem in einem organischen Lösungsmittel gelösten Polyimid und organischem Polyazid, ein photographisches Aufzeichnungsmaterial und die Verwendung des Beschichtungsmittels zum Aufbringen von Isolier- und Schutzlacken, insbesondere zur Herstellung von gedruckten Schaltungen, diskreten Halbleiterbauelementen und von integrierten Schaltkreisen.

Polyimide haben eine gute Thermostabilität und sie finden daher auch Verwendung in der Elektronik und Halbleitertechnologie als Isolier- und Schutzfilme oder zur photographischen Herstellung von Reliefabbildungen. Da Polyimide im allgemeinen in organischen Lösungsmitteln unlöslich sind, muss man von löslichen Vorstufen ausgehen, die strahlungsempfindliche Gruppen tragen oder mit strahlungsempfindlichen Verbindungen vermischt sind. Die Polyimidbildung erfolgt hier erst nach der Bilderzeugung durch thermische Zyklisierung, wobei eine beträchtliche Menge flüchtiger Anteile entfernt werden. Beim Erhitzen erleiden die erzeugten Reliefstrukturen einen erheblichen Schichtdickenverlust und eine deutliche Kontraktion in den vertikalen Dimensionen. Dies wird als besonders nachteilig empfunden, weil es sich als ausserordentlich schwierig erwiesen hat, naturgetreue Abbildungen einer vorgegebenen Maske zu erzeugen. Zudem ist die aufwendige Herstellung der Vorstufen unwirtschaftlich. Durch die verschiedenen Zusätze entfalten ferner die so hergestellten Polyimide nicht die diesen Polymeren eigenen guten elektrischen, mechanischen und thermischen Eigenschaften. Solche Vorstufen sind z. B. in der JP Kokai Sho 56-24 344, der DE-OS 2 308 830 und DE-OS 2 914 619 beschrieben.

Die direkte Vernetzung durch energiereiche Strahlung und damit die Möglichkeit der direkten Photostrukturierung von Polyimiden ist zur Vermeidung der erwähnten Nachteile äusserst wünschenswert. Aufgabe vorliegender Erfindung ist es, ein Beschichtungsmittel aufzuzeigen, mit dem Polyimide durch Strahlung direkt vernetzt werden können.

Es wurde nun gefunden, dass Polyimide mit chromophoren aromatischen Polyaziden direkt durch Strahlung vernetzt werden können, wenn die Polyimide aliphatische Gruppen enthalten.

Gegenstand vorliegender Erfindung ist ein strahlungsempfindliches Beschichtungsmittel, enthaltend neben üblichen Zusätzen (a) ein organisches Lösungsmittel, (b) ein in diesem Lösungsmittel lösliches Homo- oder Copolyimid aus aromatischen Tetracarbonsäuren und aromatischen Diaminen oder aromatischen und aliphatischen Diaminen, wobei an mindestens einen Teil der Tetracarbonsäurereste, der aromatischen Diaminreste oder beider Reste mindestens eine aliphatische Gruppe direkt oder über eine Brückengruppe gebunden ist und/oder mindestens ein Teil dieser Reste als aliphatische Brückengruppe Alkylen, Alkyliden, Cycloalkyliden oder $Si(Alkyl)_2$ enthält, und (c) mindestens 0,1 Gew.-%, bezogen auf die Komponente (b), mindestens eines organischen chromophoren Polyazides, in dem die Azidgruppen an aromatische Kohlenwasserstoffreste gebunden sind.

Die Reste mit aliphatischen Gruppen und/oder Brückengruppen sind bevorzugt zu mindestens 5 Mol-%, besonders mindestens 10 Mol-% und insbesondere mindestens 30 Mol-% im Polyimid oder Copolyimid enthalten, bezogen auf das Polyimid. Die aliphatischen Gruppen sind bevorzugt an aromatische Reste gebunden, und die Brückengruppen verbinden aromatische Reste, besonders 2 Phenylgruppen.

Die aliphatische Gruppe entspricht bevorzugt der Formel Alkyl-Q- mit 1-6, insbesondere 1-3 C-Atomen in der Alkylgruppe, worin Q für eine direkte Bindung, -O-, -S-, -SO- $-SO_2-$ -CO- -NH- -N-Alkyl- mit 1-6, vorzugsweise 1-3 C-Atomen oder -NHCO- steht. Beispiele für Alkyl sind Methyl, Äthyl, Propyl, iso-Propyl, 1-Butyl, 2-Butyl, tertiär-Butyl, 1-, 2- oder 3-Pentyl und Hexyl. Bevorzugt sind Äthyl und besonders Methyl. Besonders bevorzugt ist die aliphatische Gruppe Methyl oder Methoxy.

Die aliphatische Brückengruppe ist als Alkylen bevorzugt Äthylen und besonders Methylen, als Alkyliden, Äthyliden, 1,1- oder 2,2-Propyliden oder 1,1- oder 2,2-Butyliden, als Cycloalkyliden Cyclopentyliden oder Cyclohexyliden und als $Si(Alkyl)_2$, $Si(Methyl)_2$ oder $Si(Äthyl)_2$. Bevorzugt ist die Brückengruppe Methylen, 2,2-Propyliden und $Si(Methyl)_2$.

Die aliphatischen Gruppen und aliphatischen Brückengruppen sind bevorzugt im Diaminrest enthalten. Bei den Copolyimiden kann es sich um statistische Polymere oder um Blockcopolymere handeln. Sofern die Copolyimide Reste von aliphatischen Diaminen enthalten, sind diese bevorzugt in einer Menge von höchstens 20 Mol-%, insbesondere höchstens 10 Mol-% zugegen, bezogen auf die Diamine.

Für das erfindungsgemässe Beschichtungsmittel geeignete Polyimide und Copolyimide sind in der Literatur beschrieben, nach analogen Verfahren erhältlich oder käuflich.

Eine Gruppe von geeigneten Polymimiden ist z. B. in der US-PS 3 856 752 beschrieben. Sie bestehen im wesentlichen aus wiederkehrenden Struktureinheiten der Formel I,

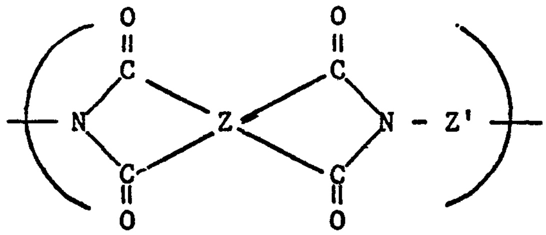

(I)

worin die vier Carbonylgruppen an verschiedene Kohlenstoffatome gebunden sind und je zwei Carbonylgruppen in ortho- oder peri-Stellung zueinander stehen,

Z einen vierwertigen Rest bedeutet, der mindestens einen aromatischen Ring enthält und

Z' einen zweiwertigen organischen Rest darstellt, ausgewählt unter aromatischen, alkylaromatischen, aliphatischen, cycloaliphatischen und heterocyclischen Resten, Kombinationen davon und Resten mit Sauerstoff, Schwefel, Stickstoff, Silicium oder Phosphor enthaltenden Brückengruppen,

mit der Massgabe, dass

1) aus der Gesamtzahl der wiederkehrenden Polyimid-Einheiten

A) in 0 bis 100 Mol-% solcher Einheiten Z ein Phenylindanrest der Strukturformel

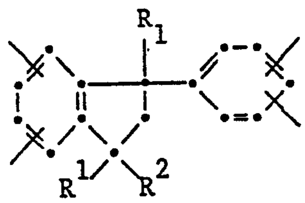

(II)

ist, worin $R_1$ Wasserstoff oder einen Alkylrest mit 1 bis 5 Kohlenstoffatomen und $R_2$ einen Alkylrest mit 1 bis 5 Kohlenstoffatomen bedeuten, und

B) in 0 bis 100 Mol% solcher Einheiten Z' ein Phenylindanrest der Strukturformel

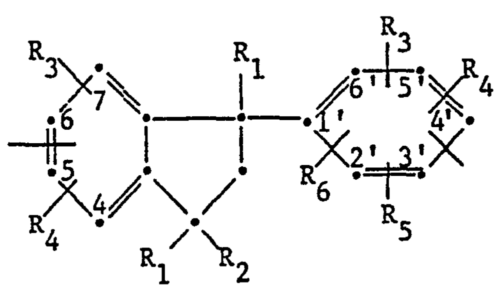

(III)

ist, worin $R_1$ Wasserstoff oder einen Alkylrest mit 1 bis 5 Kohlenstoffatomen und $R_2$ einen Alkylrest mit 1 bis 5 Kohlenstoffatomen darstellt und $R_3$, $R_4$, $R_5$ und $R_6$ unabhängig voneinander Wasserstoff, Halogen, Alkoxy oder einen Alkylrest mit 1 bis 4 Kohlenstoffatomen bedeuten und

2) aus der Gesamtzahl der Reste Z und Z' mindestens 10 Mol-%, bezogen auf die Einzelkomponenten, Phenylindanreste sind.

$R^2$ in den Formeln II und III ist bevorzugt Methyl. Der Polymerisationsgrad (Zahl der wiederkehrenden Struktureinheiten) beträgt bevorzugt mindestens 20 und kann 1000 und mehr betragen. Besonders bevorzugt ist der Polymerisationsgrad 50 bis 500 und besonders 100 bis 300.

$R_1$ und $R_2$ können in ihrer Bedeutung als Alkyl, Methyl, Äthyl, Propyl, iso-Propyl, Butyl und Pentyl sein. Besonders bevorzugt sind $R_1$ Wasserstoff und Methyl und $R_2$ Methyl.

$R_3$, $R_4$, $R_5$ und $R_6$ sind in ihrer Bedeutung als Halogen bevorzugt Chlor oder Brom. Alkoxyreste sind für $R_3$, $R_4$, $R_5$ und $R_6$ z. B. Butoxy, Propoxy, Äthoxy und besonders Methoxy, Alkylreste sind für $R_3$, $R_4$, $R_5$ und $R_6$ z. B. Butyl, tertiär-Butyl, Propyl, iso-Propyl, Äthyl und besonders Methyl. Besonders bevorzugt sind $R_3$, $R_4$, $R_5$ und $R_6$ Wasserstoff, Methyl und Chlor.

Die Phenylindandiamin-Komponente des löslichen Polyimids kann aus jeder Kombination der isomeren oder substituierten isomeren Diaminoverbindungen, die durch die vorstehende Formel III dargestellt werden, bestehen. Z.B. kann die Phenylindandiamin-Komponente 0 bis 100 Mol-% 5-Amino-1-(4'-aminophenyl)-1,3,3-trimethylindan in Kombination mit 100 bis 0 Mol-% 6-Amino-1-(4'-aminophenyl)-1,3,3-trimethyl-indan umfassen. Weiterhin kann jedes oder können beide dieser Isomeren über die Diamino-Isomeren, die durch die Formel III

dargestellt werden, substituiert werden. Beispiele für solche substituierten Diamino-Isomeren sind 5-Amino-6-methyl-1-(3'-amino-4'-methyl-phenyl)-1,3,3-trimethylindan, 5-Amino-1-(4'-amino-Ar',Ar'-dichlor-phenyl)-Ar,Ar-dichlor-1,3,3-trimethylindan, 6-Amino-1-(4'-amino-Ar',Ar'-dichlorphenyl)-Ar,Ar-dichlor-1,3,3-trimethylindan, 4-Amino-6-methyl-1-(3'-amino-4'-methylphenyl)-1,3,3-trimethylindan und Ar-amino-1-(Ar'-amino-2'.4'-dimethylphenyl)-1,3,3,4,6-pentamethylindan. Ar und Ar' in den vorstehenden Formeln zeigen die unbestimmte Lage der angegebenen Substituenten in den Phenylringen an. Die Aminogruppen befinden sieh bevorzugt in der Stellung 7, besonders 5 und 6, und den Stellungen 3' und besonders 4'.

Beispiele für die Phenylindandianhydrid-Komponente mit einem Rest der Formel II sind:
1-(3',4'-Dicarboxyphenyl)-1,3,3-trimethylindan-5,6-dicarbonsäuredianhydrid,
1-(3',4'-Dicarboxyphenyl)-1,3,3-trimethylindan-6,7-dicarbonsäuredianhydrid,
1-(3',4'-Dicarboxyphenyl)-3-methylindan-5,6-dicarbonsäuredianhydrid und
1-(3',4'-Dicarboxyphenyl)-3-methylindan-6,7-dicarbonsäuredianhydrid.

Z in Formel I kann als Nichtphenylindanrest aus den folgenden Gruppen ausgewählt sein: aromatische, aliphatische, cycloaliphatische, heterocyclische Gruppen, Kombinationen von aromatischen und aliphatischen Gruppen. Die Gruppen können auch substituiert sein. Die Gruppen Z können durch die folgenden Strukturen gekennzeichnet sein:

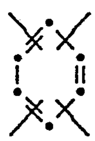 , 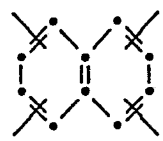 , 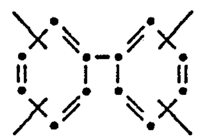 ,

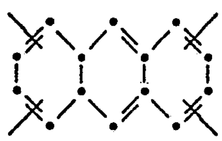 , 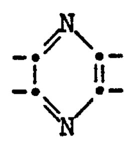 , 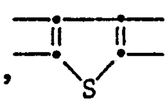

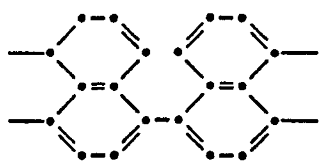

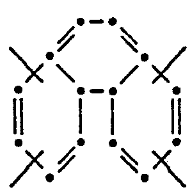 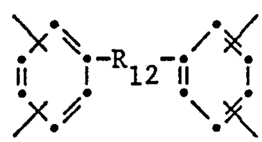

worin $R_{12}$ ausgewählt wird aus der Gruppe bestehend aus

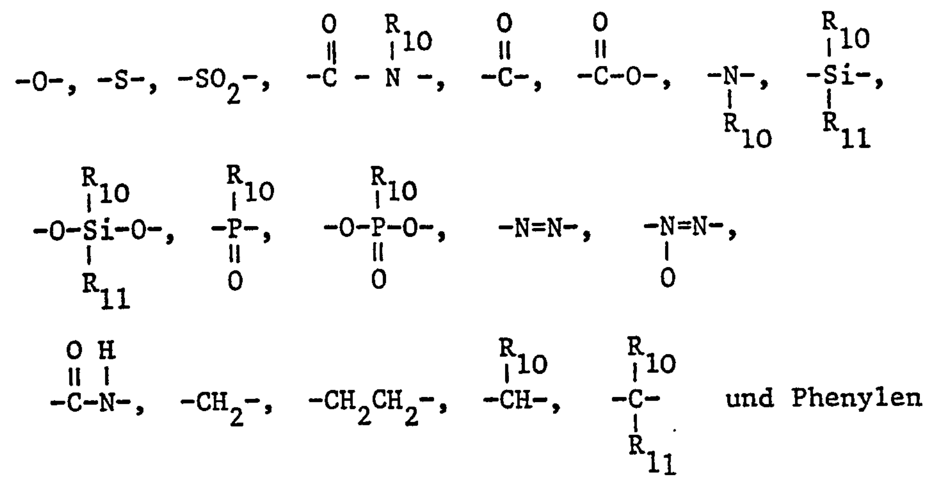

und Phenylen,

wobei $R_{10}$ und $R_{11}$ Alkyl mit bevorzugt 1 bis 6 C-Atomen oder Aryl, besonders Phenyl, bedeuten.
Geeignete Tetracarbonsäureanhydride mit einem vierwertigen Rest Z sind z. B.
2,3,9 10-Perylentetracarbonsäuredianhydrid,
1,4,5,8-Naphthalintetracarbonsäuredianhydrid,
2,6-Dichlornaphthalin-1,4,5,8-tetracarbonsäuredianhydrid,
2,7-Dichlornaphthalin-1,4,5,8-tetracarbonsäuredianhydrid,
2,3,6,7-Tetrachlornaphthalin-1,4,5,8-tetracarbonsäuredianhydrid,
Phenanthren-1,8,9,10-tetracarbonsäuredianhydrid,
2,3,3',4'-Benzophenontetracarbonsäuredianhydrid,
Pyromellitsäuredianhydrid,
3,3',4,4'-Benzophenontetracarbonsäuredianhydrid,
2,2',3,3'-Benzophenontetracarbonsäuredianhydrid,
3,3',4,4'-Biphenyltetracarbonsäuredianhydrid,
2,2',3,3'-Biphenyltetracarbonsäuredianhydrid,
4,4'-Isopropylodendiphthalsäureanhydrid,
3,3'-Isopropylidendiphthalsäureanhydrid,
4,4'-Oxydiphthalsäureanhydrid,
4,4'-Sulfonyldiphthalsäureanhydrid,
3,3'-Oxydiphthalsäureanhydrid,
4,4'-Methylendiphthalsäureanhydrid,
4,4'-Thiodiphthalsäureanhydrid,
4,4'-Äthylidendiphthalsäureanhydrid,
2,3,6,7-Naphthalintetracarbonsäuredianhydrid,
1,2,4,5-Naphthalintetracarbonsäuredianhydrid,
1,2,5,6-Naphthalintetracarbonsäuredianhydrid,
Benzol-1,2,3,4-tetracarbonsäuredianhydrid,
Pyrazin-2,3,5,6-tetracarbonsäuredianhydrid,
Thiophen-2,3,4,5-tetracarbonsäuredianhydrid
und Dianhydride der allgemeinen Formel

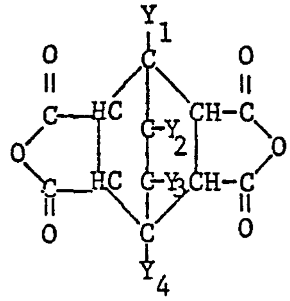

worin $Y_1$, $Y_2$, $Y_3$ und $Y_4$ jeweils unter Wasserstoff Alkyl, besonders Methyl ausgewählt werden.

Die bevorzugtesten Nicht-Phenylindan-aromatischen Dianhydride sind Pyromellitsäuredianhydrid und aromatische Dianhydride, gekennzeichnet durch die allgemeine Formel

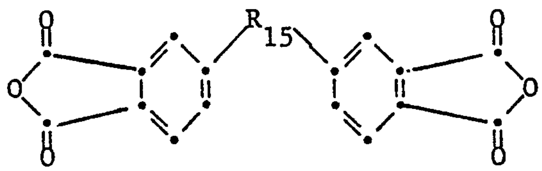
,

worin $R_{15}$ Methylen, Sauerstoff oder Sulfonyl und besonders Carbonyl bedeutet.

Die vorstehend definierte Gruppe Z' kann ausgewählt werden unter Alkylengruppen mit 2 bis 12 Kohlenstoffatomen, Cycloalkylengruppen mit 4 bis 6 Ringkohlenstoffatomen; einer Xylylengruppe, Arylengruppen ausgewählt unter ortho-, meta- oder para-Phenylen, Tolylen, Biphenylen, Naphthylen oder Anthrylen; einer substituierten Arylengruppe der Formel

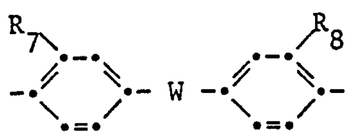
,

worin W eine covalente Bindung, Schwefel, Carbonyl, -NH, -N-Alkyl, O, S, SS, -N-Phenyl, Sulfonyl, eine lineare oder verzweigte Alkylengruppe mit 1 bis 3 Kohlenstoffatomen, Alkyliden mit 2 bis 12 C-Atomen, Cycloalkyliden mit 5 oder 6 Ringkohlenstoffatomen, Arylen, insbesondere die Phenylengruppe, oder eine Dialkyl- oder Diarylsilylgruppe bedeutet und $R_7$ und $R_8$ unabhängig voneinander jeweils Wasserstoff, Halogen, insbesondere Chlor oder Brom, Alkyl mit 1 bis 5 Kohlenstoffatomen, insbesondere Methyl, Alkoxy mit 1 bis 5 Kohlenstoffatomen, insbesondere Methoxy, oder Aryl, insbesondere Phenyl, bedeuten.

Weiter kann die Gruppe Z' der Formel

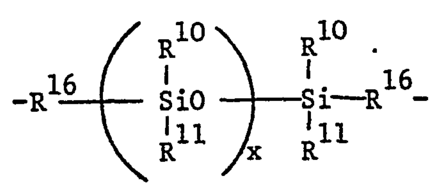

entsprechen, worin $R^{10}$ und $R^{11}$ die zuvor angegebene Bedeutung haben und $R^{16}$ ein zweiwertiger Kohlenwasserstoffrest ist; z. B. Alkylen mit 1 bis 12, vorzugsweise 1 bis 6 C-Atomen, Cycloalkylen mit bevorzugt 5 oder 6 Ringkohlenstoffatomen oder Phenylen. Diamine mit dieser Gruppe Z' sind in der US-PS 4 030 948 beschrieben.

Bevorzugter umfasst Z' Gruppen, die von den aromatischen Diaminen abgeleitet werden, die im unmittelbar vorangehenden Absatz beschrieben wurden. Am bevorzugtesten stellt Z' eine Gruppe der Formel

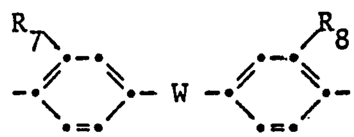

dar, worin W eine covalente Bindung, Methylen, Schwefel, Sauerstoff oder Sulfon darstellt und $R_7$ und $R_8$ unabhängig voneinander Wasserstoff, Halogen oder Alkyl mit 1 bis 5 Kohlenstoffatomen, insbesondere Methyl, bedeuten, oder eine Gruppe der Formel

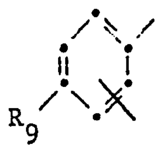

,

worin $R_9$ Wasserstoff, Halogen oder Alkyl mit 1 bis 5 Kohlenstoffatomen insbesondere Methyl bedeutet.

Besonders bevorzugt ist Z' meta- oder para-Phenylen oder ein Rest der Formel

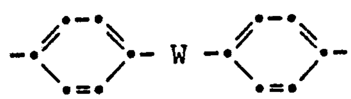

,

worin W eine covalente Bindung, Methylen, Alkyliden, 2,2-Propyliden, Cyclohexyliden, Schwefel, Sauerstoff oder Sulfon bedeutet.

Beispiele für Diamine mit einem zweiwertigen Rest Z' sind:

4,4'-Methylenbis-(o-chloranilin)
3,3'-Dichlorbenzidin
3,3'-Sulfonyldianilin
4,4'-Diaminobenzophenon
1,5-Diaminonaphthalin
Bis-(4-aminophenyl)-dimethylsilan
Bis-(4-aminophenyl)-diäthylsilan
Bis-(4-aminophenyl)-diphenylsilan
Bis-(4-aminophenyloxy)-dimethylsilan
Bis-(4-aminophenyl)-äthylphosphinoxid
N-(Bis-(4-aminophenyl))-N-methylamin
N-(Bis-(4-aminophenyl))-N-phenylamin
4,4'-Methylenbis-(3-methylanilin)
4,4'-Methylenbis-(2-äthylanilin)
4,4'-Methylenbis-(2-methoxyanilin)
5,5'-Methylenbis-(2-aminophenol)
4,4'-Methylenbis-(2-methylanilin)
4,4'-Oxybis-(2-methoxyanilin)
4,4'-Oxybis-(2-chloranilin)
5,5'-Oxybis-(2-aminophenol)
4,4'-Thiobis-(2-methylanilin)
4,4'-Thiobis-(2-methoxyanilin)
4,4'-Thiobis-(2-chloranilin)
4,4'-Sulfonylbis-(2-methylanilin)
4,4'-Sulfonylbis-(2-äthoxyanilin)
4,4'-Sulfonylbis-(2-chloranilin)
5,5'-Sulfonylbis-(2-aminophenol)
3,3'-Dimethyl-4,4'-diaminobenzophenon
3,3'-Dimethoxy-4,4'-diaminobenzophenon
3,3'-Dichlor-4,4'-diaminobenzophenon
4,4'-Diaminobiphenyl
m-Phenylendiamin
p-Phenylendiamin
4,4'-Methylendianilin
4,4'-Oxydianilin
4,4'-Thiodianilin
4,4'-Sulfonyldianilin

4,4'-Isopropylidendianilin
3,3'-Dimethylbenzidin
3,3'-Dimethoxybenzidin
3,3'-Dicarboxybenzidin
Diaminotoluol.

Eine bevorzugte Untergruppe an löslichen Polyimiden sind solche, in denen 0 bis 100 Mol-% der Reste Z der Formel

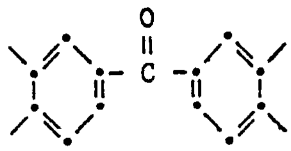

oder der Formel

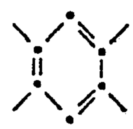

entsprechen, während 100 bis 0 Mol-% der Reste Z eine Mischung aus

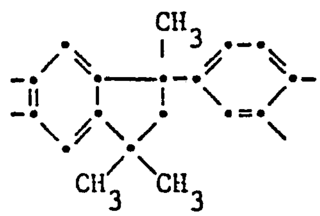

und

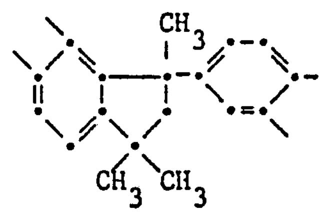

bedeuten und dass 100 bis 10 Mol-% der Reste Z' gleich einem Rest der Formel III sind, worin $R_1$, $R_3$, $R_4$, $R_5$ und $R_6$ unabhängig voneinander Wasserstoff oder Methyl und $R_2$ Methyl bedeuten, während 0 bis 90 Mol-% der Reste Z' der Formel

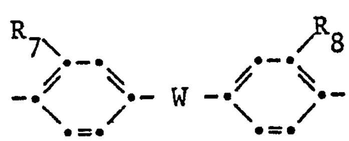 oder 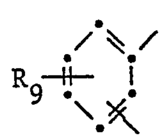

entsprechen worin W eine covalente Bindung, Methylen, Äthyliden, 2,2-Propyliden, Cyclohexyliden, Schwefel, Sauerstoff oder Sulfon bedeutet, $R_7$ und $R_8$ unabhängig voneinander Wasserstoff, Halogen, Alkoxy oder Alkylgruppen mit 1 bis 5 Kohlenstoffatomen darstellen und $R_9$ Wasserstoff, Halogen, Alkoxy oder eine Alkylgruppe mit 1 bis 5 Kohlenstoffatomen bedeutet.

Besonders bevorzugt sind solche Polyimide, in denen Z'

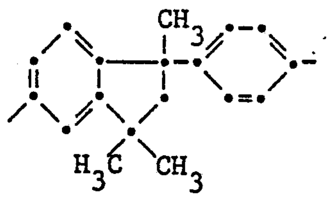 oder 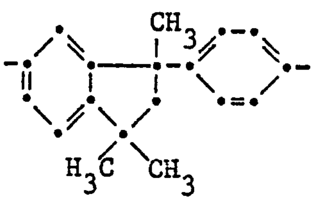 oder 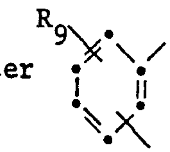

oder eine der Mischungen davon ist und Z

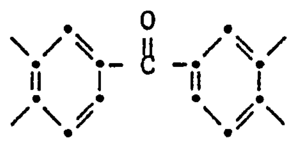 oder 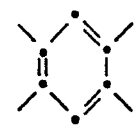

oder eine Mischung davon bedeutet.

Andere Polyimide und Copolyimide der Formel I mit Nichtphenylindanresten sind ebenfalls geeignet. Sie können aus den zuvor genannten anderen Tetracarbonsäuren und Diaminen aufgebaut sein, wobei zumindest ein Teil der Diamine aliphatische Gruppen oder Brückengruppen enthält. Die Wahl der Komponenten und deren Mischungsverhältnisse kann die Löslichkeit sehr beeinflussen. Es sind verschiedene Methoden bekannt geworden, um lösliche Polyimide und Copolyimide zu erhalten. Solche Polyimide, die aliphatische Gruppen in den Diaminresten enthalten, sind z. B. beschrieben in J. of Applied Polymer Science, Vol. 26, 3837-3843 (1981); F.W. Harris and L.H. Garnier, Structure-Solubility Relationships in Polymeres, Academic Press, New York, Seiten 183-198 (1977). Für das erfindungsgemässe Beschichtungsmittel bevorzugte Homo- und Copolyimide sind in den amerikanischen Patentschriften 3 708 458; 3 787 367 und 3 870 677 sowie in der DE-AS 1 962 588 beschrieben. Von diesen sind besonders jene bevorzugt, die aus Resten von Benzophenontetracarbonsäureanhydrid und/oder Pyromellithsäuredianhydrid und bezogen auf die Diaminreste, 65-90 Mol-% Resten von Toluoldiamin im Gemisch mit 35 bis 10 Mol-% 4,4'-Diaminodiphenylmethan, oder aus Resten von 2,2'- oder 3,3'-Dimethyl-, -Diäthyl- oder -Dimethoxy-4,4'-diaminodiphenylmethan bestehen.

Eine weitere bevorzugte Gruppe von Homo- und Copolyimiden sind solche, die im wesentlichen aus wiederkehrenden Struktureinheiten der Formel 1 bestehen, worin die vier Carbonylgruppen an verschiedene Kohlenstoffatome gebunden sind und je zwei Carbonylgruppen in ortho- oder peri-Stellung zueinander stehen,

Z einen vierwertigen Rest bedeutet, der mindestens einen aromatischen Ring enthält und

Z' einen zweiwertigen organischen Rest darstellt, ausgewählt unter aromatischen, alkylaromatischen, aliphatischen, cycloaliphatischen und heterocyclischen Resten, Kombinationen davon und Resten mit Sauerstoff, Schwefel, Stickstoff, Silicium oder Phosphor enthaltenden Brückengruppen,

mit der Massgabe, dass aus der Gesamtzahl der wiederkehrenden Polyimideinheiten, bezogen auf die Tetracarbonsäureanhydridreste bzw. Diaminreste,

A) 30-100 Mol-% solcher Einheiten Z Benzophenontetracarbonsäurereste darstellen, und

B) 30-100 Mol-% solcher Einheiten Z' Reste der Formeln

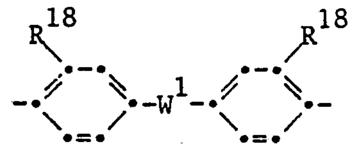,

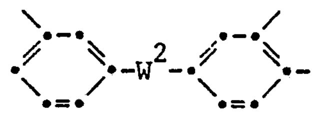 oder 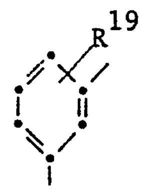

sind, worin

$W^1$ $CH_2$, O, S, $SO_2$, CO oder 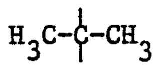

$W^2$ $CH_2$, S, $SO_2$, CO oder 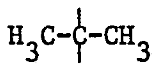

$R^{18}$ Alkyl oder Alkoxy mit 1 bis 6 C-Atomen, Halogen, besonders Cl, $CO_2H$, OH, $SO_3H$ oder $NHCOCH_3$ und $R^{19}$ Alkyl mit 1 bis 6 C-Atomen bedeutet, wobei mindestens 10 Mol-% dieser Reste solche mit $CH_2$,
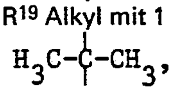,
Alkyl, Alkoxy oder $NHCOCH_3$-Gruppen sind.

Bevorzugt sind $R^{18}$ und $R^{19}$ Methyl sowie $W^1$ und $W^2$ $CH_2$.

Eine weitere geeignete Gruppe von Homo- und Copolyimiden sind solche aus wiederkehrenden Struktureinheiten der Formel I, worin, bezogen auf die Tetracarbonsäureanhydridreste bzw. Diaminreste,

A) 75 bis 100 Mol-% der Einheiten Z ein Pyromellitsäureanhydridrest ist, und

B) 25 bis 0 Mol-% der Einheiten der Formel

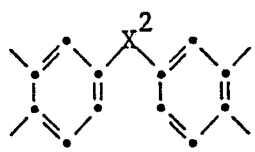

entsprechen, worin $X^2$ für O, $SO_2$ und besonders CO steht, sowie

C) 10 bis 35 Mol-% Einheiten Z' der Formel

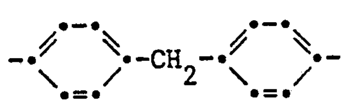

und 90 bis 65 Mol-% der Einheiten Z' der Formeln

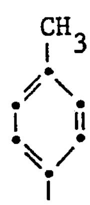 oder 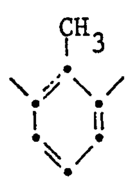

oder Mischungen davon entsprechen.

Ebenfalls besonders geeignete Copolyimide sind solche aus wiederkehrenden Struktureinheiten der Formel I, worin

A) Z einen Benzophenontetracarbonsäuredianhydridrest, und

B) bezogen auf die Diaminreste 10-30 Mol-% der Einheiten Z' der Formel

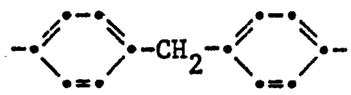

und

C) 90-70 Mol-% der Einheiten Z'

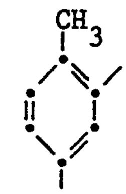 oder 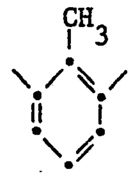

oder Mischungen davon entsprechen.

Unter den Polyimiden sind solche bevorzugt, die eine hohe Temperaturbeständigkeit aufweisen. Besonders bevorzugt sind solche Polyimide, die sich an der Luft bei einer Temperatur $\leqslant$350°C nicht zersetzen. Es ist ferner bekannt, dass für eine gute Photostrukturierung von polymeren Materialien diese eine möglichst enge Molekulargewichtsverteilung aufweisen sollen. Es hat sich als sehr vorteilhaft erwiesen, die löslichen Polyimide mittels bekannter Trennmethoden wie fraktioniertes Fällen vorzubehandeln, um Beschichtungsmittel mit enger Molekulargewichtsverteilung zu erhalten. Es ist ferner bekannt, dass die Strahlungsempfindlichkeit mit dem mittleren Molekulargewicht $\bar{M}_w$ anwächst. Ein mittleres Molekulargewicht von 10'000 bis 500'000, bevorzugt 30'000 bis 300'000 und besonders 30'000 bis 200'000, hat sich als günstig erwiesen.

Geeignete organische Lösungsmittel sind polare, besonders polare, aprotische Lösungsmittel, die alleine oder in Mischungen aus mindestens zwei Lösungsmitteln verwendet werden können. Geeignete Lösungsmittel sind z. B.: Äther wie Dibutyläther, Tetrahydrofuran, Dioxan, Methyläthylenglykol, Dimethyläthylenglykol, Dimethyldiäthylenglykol, Diäthyldiäthylenglykol, Dimethyltriäthylenglykol, halogenierte Kohlenwasserstoffe wie Methylenchlorid, Chloroform, 1,2-Dichloräthan, 1,1,2-Trichloräthan, 1,1,2,2-Tetrachloräthan, Carbonsäureester und Lactone wie Essigsäureäthylester, Propionsäuremethylester, Benzoesäureäthylester, 2-Methoxyäthylacetat, γ-Butyrolacton, δ-Valerolacten und Mevalolacton, Carbonsäureamide und Lactame wie Formamid, Acetamid, N-Methylformamid, N,N-Dimethylformamid, N,N-Diäthylformamid, N,N-Dimethylacetamid, N,N-Diäthylacetamid, γ-Butyrolactam, ε-Caprolactam, N-Methylpyrrolidon, N-Acetylpyrrolidion, N-Methylcaprolactam, Tetramethylharnstoff, Hexamethylphosphorsäureamid, Sulfoxide wie Dimethylsulfoxid, Sulfone wie Dimethylsulfon, Diäthylsulfon, Trimethylensulfon, Tetramethylensulfon, primäre, sekundäre und tertiäre Amine wie Methylamin, Äthylamin, Propylamin, Pyrrolidin, Piperidin, Morpholin, Dimethylamin, Diäthylamin, Methyläthylamin, Trimethylamin, Triäthylamin, N-Methylpyrrolidin, N-Methylpiperidin, N-Methylmorpholin, substituierte Benzole wie Chlorbenzol, Nitrobenzol oder Kresol.

Die Polyazide (b) sind bekannt und z. B. in der EP-A 0 065 352 beschrieben. Sie können alleine oder in beliebigen Mischungen eingesetzt werden.

Die aromatischen Kohlenwasserstoffreste der chromophoren Polyazide (c) können durch 1 bis 2 Halogengruppen, besonders Chlor, und Alkoxy- oder Alkylgruppen mit 1 bis 5 C-Atomen substituiert sein. Bevorzugt sind organische chromophore Diazide, besonders solche ohne Imidgruppen. Hierbei kann es sich um Diazide der Formel

$N_3$-D-$N_3$

handeln worin D Arylen wie Phenylen, Naphthylen, Toluylen oder Perylen bedeutet.

Bevorzugter ist eine Gruppe von organischen Diaziden der Formel

$N_3$-E-$(Y)_q$-E-$N_3$,

worin E für einen aromatischen Kohlenwasserstoffrest, besonders für Phenylen, und q für 0 oder 1 stehen und Y eine anorganische oder organische Gruppe ist, die zusammen mit den aromatischen Kohlenwasserstoffresten E ein mesomeres System bildet. Bevorzugt ist Y O, CO, S, SO, $SO_2$, NR' mit R' gleich Wasserstoff, Alkyl, Cycloalkyl, Aryl oder Aralkyl,

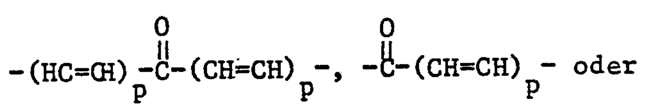 oder $-(CH=CH)_p-$

mit p = 1-3, -CH=N-, 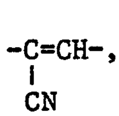, -CH=N-N=CH-, 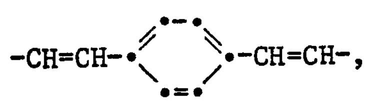,

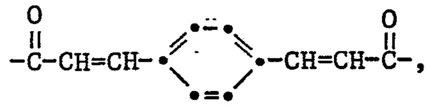, 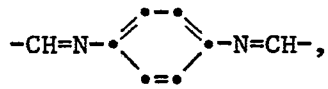,

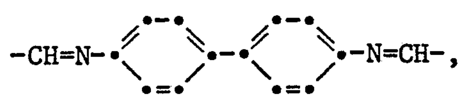, 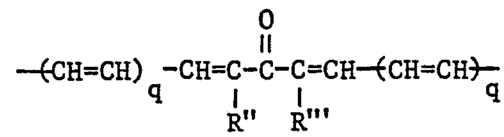,

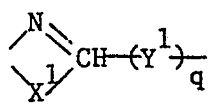 oder 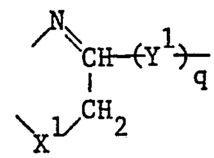,

worin R″ und R‴ unabhängig voneinander Alkyl mit 1 bis 5 C-Atomen oder R″ und R‴ zusammen unsubstituiertes oder mit Alkyl, Hydroxyalkyl, Alkoxy, Trialkylsilyl, Hydroxy, Carboxyl, Alkoxycarbonyl, Amino, Alkylamino oder Dialkylamino substituiertes Äthylen oder Trimethylen bedeuten, q 0 oder 1 ist, $X^1$ für O, S oder NH steht, $Y^1$ unabhängig die gleiche Bedeutung wie Y hat und die freien Bindungen an N und $Y_1$ zusammen mit der Gruppe E einen kondensierten heterocyclischen Ring bilden. Bevorzugt ist $Y^1$ eine direkte Bindung oder -CH=CH-. R′ enthält als Alkyl bevorzugt 1 bis 6 C-Atome, als Cycloalkyl bevorzugt 5 oder 6 Ringkohlenstoffatome, als Aryl bevorzugt 6 bis 12 C-Atome und als Aralkyl bevorzugt 7 bis 14 C-Atome. Als Substituent für die Äthylen- oder Trimethylengruppe komunt bevorzugt Alkyl mit 1-6 C-Atomen, besonders Methyl oder Äthyl, Hydroxyalkyl mit 1 bis 6 C-Atomen, besonders Hydroxmethyl, Alkoxy mit 1 bis 6 C-Atomen, besonders Methoxy oder Äthoxy, Alkoxycarbonyl mit 1 bis 12, besonders 1 bis 6 C-Atomen, wie Methoxy- oder Äthoxycarbonyl oder Alkylamino oder Dialkylamino mit 1 bis 6 C-Atomen in der Alkylgruppe wie Dimethylamino sowie Trialkylsilyl mit 1 bis 6 C-Atomen in den Alkylgruppen, wie Trimethylsilyl, in Frage.

Eine bevorzugte Untergruppe sind Diazide der Formel

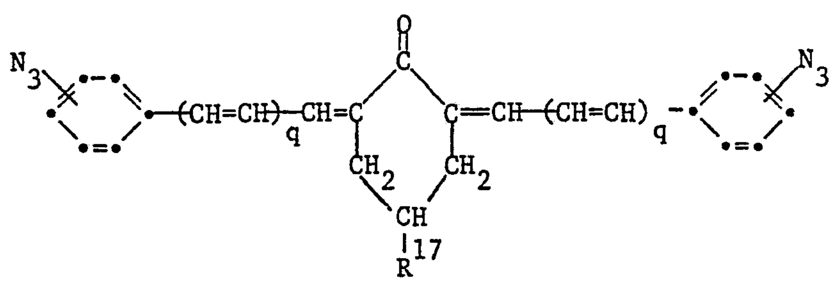

worin die Azidogruppen bevorzugt in p-Stellung gebunden sind, q 0 oder 1 ist und $R^{17}$ OH, COOH, $NH_2$, Alkyl, Hydroxyalkyl, Alkoxycarbonyl, Trialkylsilyl, Alkylamino oder Dialkylamino bedeutet. Für $R^{17}$ gelten die zuvor aufgeführten Bevorzugungen.

Beispiele für die Polyazide sind:

Diazidobenzol, Diazidonaphthalin, Diazidotoluol, p-Diazidobiphenylen, 4,4′-Diazido-2,2-dimethylbiphenylen, 4,4′-Bisazido-diphenyläther, 4,4′-Bisazido-diphenylketon, 4,4′-Bisazido-diphenylsulfon, 3,3′-Dis-azidodiphenylsulfid, 4,4′-Bisazidodiphenylamin, 1,2-Bis-(4-azido-phenyl)äthylen, 1-Cyano-1,2-Bis-(-4-azidophenyl)äthylen, 4-Azidophenyl-(4-azidophenylvinyl)keton, Bis-(4-aziodophenylvinyl)keton, 1,4-Bis-(4-azidophenyl)butadien und solche der Formeln

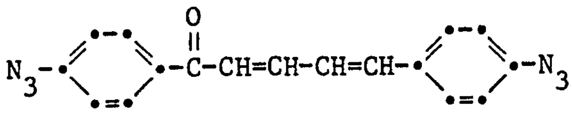 , 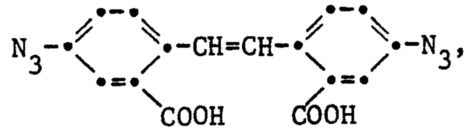

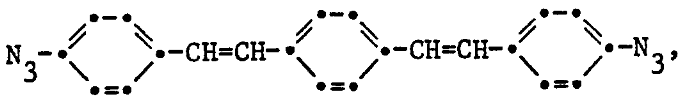

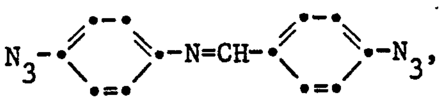 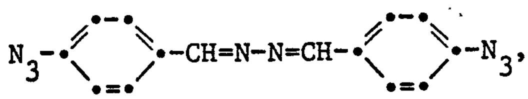

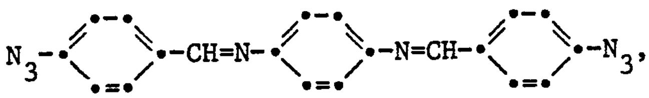

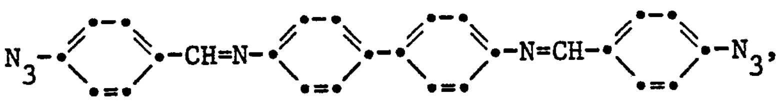

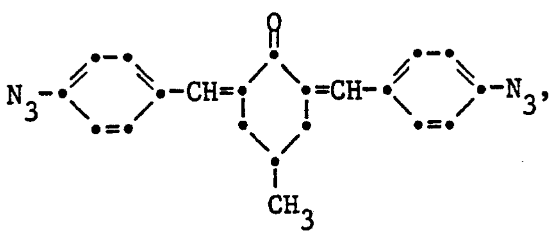

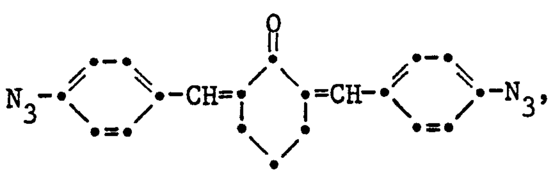 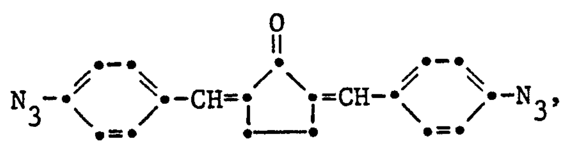

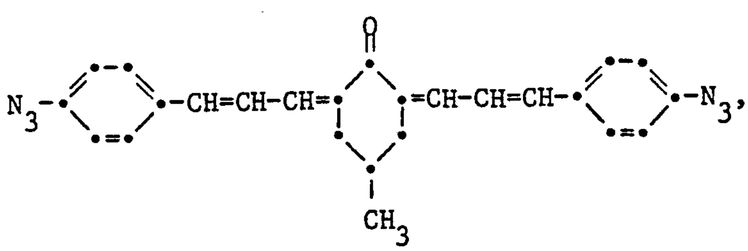

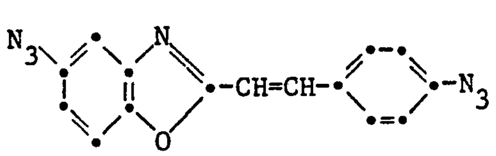 , 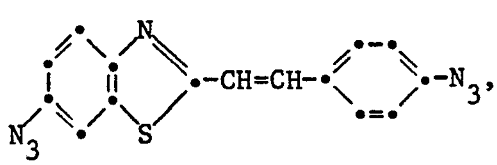

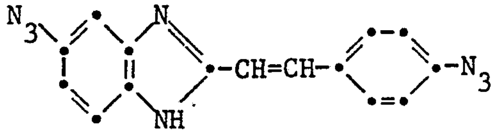,

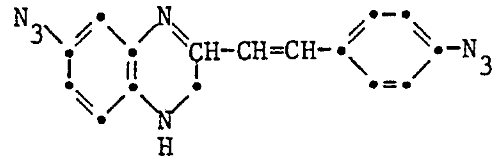

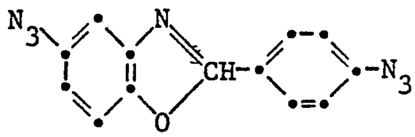,

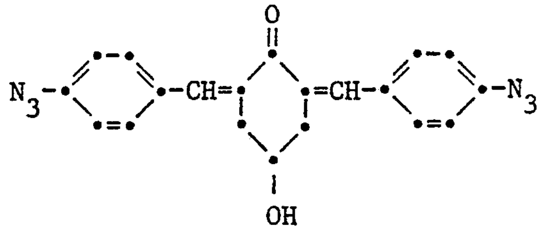,

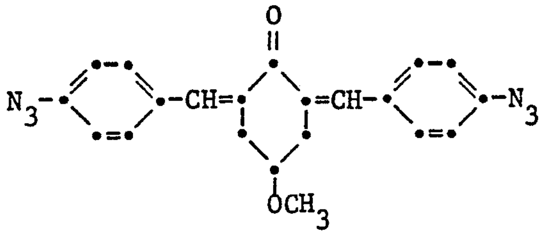,

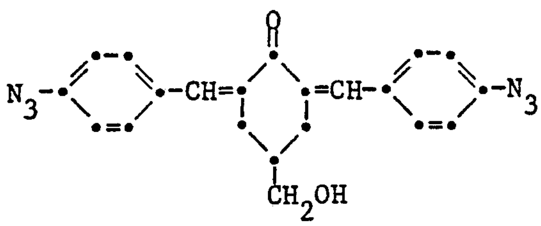,

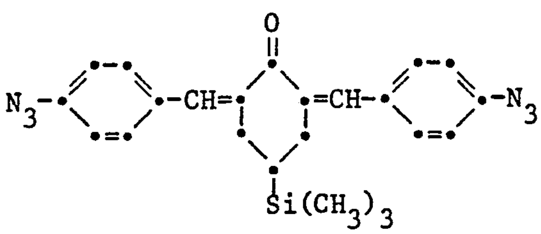,

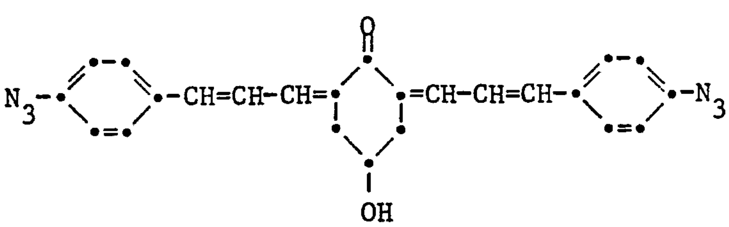,

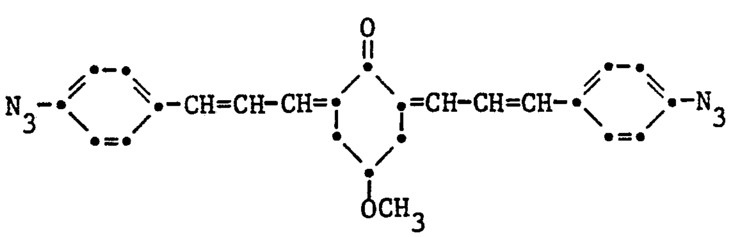,

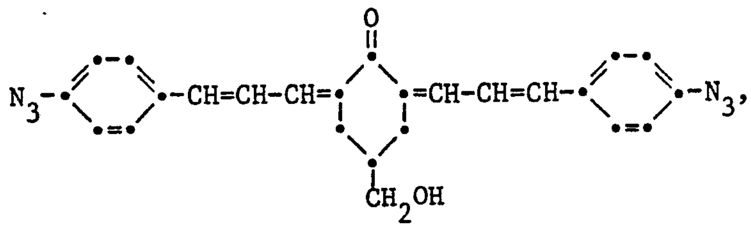

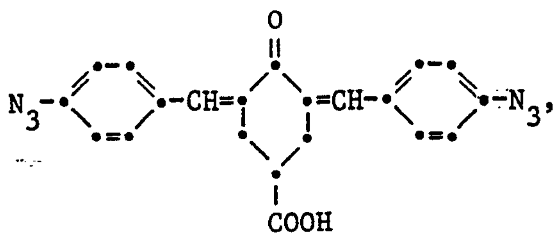

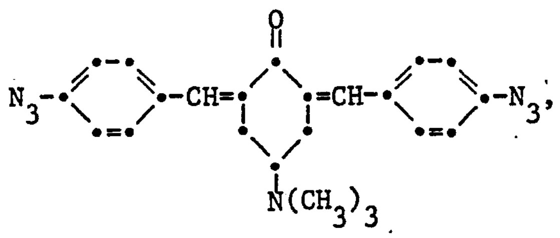

and

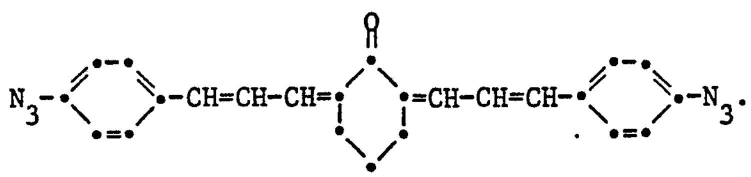

Die Herstellung der erfindungsgemässen Beschichtungsmittel erfolgt durch Lösen der Komponenten im organischen Lösungsmittel. Zweckmässig geht man so vor, dass zunächst das Polyimid unter Erwärmen vollständig gelöst wird und danach das Bisazid zugemischt wird, gegebenenfalls unter leichtem Erwärmen. Ungelöste Anteile können durch Filtration, bevorzugt einer Druckfiltration, entfernt werden.

Die mengenmässige Zusammensetzung des erfindungsgemässen Beschichtungsmittels richtet sich im wesentlichen nach der gewünschten Applikation. Sie kann 80 bis 99,9, vorzugsweise 85 bis 99,9 und besonders 90 bis 97 Gew.-% Polyimid (b) und 20 bis 0,1, vorzugsweise 15 bis 0,1 und insbesondere 10 bis 3 Gew.-% Bisazid (c) betragen, wobei im Lösungsmittel (a) vorzugsweise nicht mehr als 50 Gew.-%, besonders nicht mehr als 30 Gew.-%, und insbesondere nicht mehr als 20 Gew.-% des Polyimides (b) und Bisazides (c) gelöst sind, bezogen auf die Lösung.

Die Photostrukturierung bzw. Photovernetzung kann durch energiereiche Strahlung hervorgerufen werden, z.

B. durch Licht im Bereich von 600-200 nm, durch Röntgenstrahlen, Laserlicht, Elektronenstrahlen usw. und insbesondere durch Licht im Bereich von 450-300 µm.

Den Beschichtungsmitteln können übliche Zusatzmittel einverleibt werden, die die Lichtempfindlichkeit nicht negativ beeinflussen. Beispiele hierfür sind Sensibilisatoren, Mattierungsmittel, Verlaufmittel, feinteilige Füllstoffe, Flammschutzmittel, optische Aufheller, Antioxidantien, Lichtschutzmittel, Stabilisatoren, Farbstoffe, Pigmente und Haftvermittler.

Ferner können Verbindungen zugegeben werden, die die Empfindlichkeit von aromatischen Polyaziden erhöhen können. Bevorzugte Verbindungen dieser Art sind z. B. in Photographic Science and Engineering, Vol. 17, Number 4, S. 390 ff (1973) beschrieben. Beispiele sind Anthron, 1,9-Benzanthron, Acridin, Cyanoacridin, Nitropyren, 1,8-Dinitropyren, Michler's Keton, 5-Nitroacenaphten, 2-Nitrofluorenon, 1,2-Benzantrachinon, 2-Chloro-1,8-phthaloylnaphthalin. Solche Verbindungen können alleine oder in Mischung verwendet werden. Als Zusätze können auch Farbstoffe beigegeben werden, die den negativen Einfluss von reflektiertem Streulicht auf das Auflösungsvermögen vermindern können (anti halation agents). Solche Verbindungen sind z. B. in der US-PS 4 349 619 beschrieben.

Das erfindungsgemässe lichtempfindliche Beschichtungsmittel ist eine viskose Flüssigkeit, das eine hohe Lagerstabilität aufweist, aber vor Licht- und Wärmeeinfluss geschützt werden muss. Es eignet sich besonders für die Herstellung von Schutz- und Passivierlacken in der Elektrotechnik und Elektronik sowie als photographisches Aufzeichnungsmaterial, z. B. zur Herstellung von Photomasken für die Elektronik, den Textildruck und das graphische Gewerbe.

Die lichtempfindliche Schicht kann mittels üblichen Methoden wie Tauch-, Streich- und Sprühverfahren, Schleuder-, Kaskadenguss- und Vorhanggussbeschichtung, auf geeignete Substrate bzw. Trägermaterialien, aufgebracht werden. Geeignete Substrate sind z. B. Kunststoffe, Metalle und Metalllegierungen, Halbmetalle, Halbleiter, Glas, Keramik und andere anorganische Materialien wie z. B. $SiO_2$ und $Si_3N_4$. Danach wird das Lösungsmittel durch Erwärmen, gegebenenfalls im Vakuum entfernt. Man erhält klebfreie, trockene und gleichmässige Filme. Die aufgebrachten Filme mit Schichtdicken bis zu ca. 15 µm, bevorzugt bis 5 µm und besonders bis 2 µm, werden dann durch Belichtung vernetzt und danach gegebenenfalls durch Tempern vollständig ausgehärtet. Man erhält so Schutzfilme mit hervorragender Haftung und hoher thermischer, mechanischer und chemischer Widerstandsfähigkeit für z. B. integrierte Schaltkreise.

Die Photovernetzung mit Bisaziden wird bekanntlich durch Luftsauerstoff gehemmt, besonders in dünnen Schichten. Dieser Effekt kann mittels üblicher Methoden vermieden werden, wie Aufbringen einer temporären Schutzschicht aus z. B. Polyvinylalkohol, durch Arbeiten unter Inertgas oder durch Ansaugen der Photomaske mittels Vakuum. Ferner kann man Verbindungen beigeben, die den Einfluss des Sauerstoffs zurückdrängen. Solche Verbindungen sind in der US-PS 3 479 185 beschrieben.

Das erfindungsgemässe Beschichtungsmittel eignet sich auch hervorragend zur Herstellung eines photographischen Aufzeichnungsmaterials für Reliefabbildungen. Ein weiterer Gegenstand vorliegender Erfindung ist ein solches Aufzeichnungsmaterial aus einem Träger bzw. Substrat, auf dem als lichtempfindliche Schicht eine Mischung des Polyimides (b) und des Bisazides (c) aufgebracht ist. Die Dicke der lichtempfindlichen Schicht kann bis 15 µm, besonders bis 5 µm und insbesondere bis 2 µm betragen.

In dem photographischen Aufzeichnungsmaterial kann die lichtempfindliche Schicht z. B. als Ätzresist zur Herstellung gedruckter Schaltungen und Druckplatten und integrierter Schaltkreise, als Relais für die Herstellung von Röntgenmasken, als Lötstopplack, als Dilelektrikum für Mehrlagenschaltungen oder als Strukturelement für Flüssigkristallanzeiger verwendet werden.

Die photographische Erzeugung der Reliefstruktur erfolgt durch bildmässige Belichtung durch eine Photomaske, anschliessende Entwicklung unter Entfernung der unbelichteten Anteile mit einem Lösungsmittel oder einem Lösungsmittelgemisch, wonach gegebenenfalls das erzeugte Bild durch eine thermische Nachbehandlung stabilisiert werden kann.

Das erfindungsgemässe Beschichtungsmittel weist verschiedene weitere Vorteile auf. Die nachträgliche Imidbildung in den bekannten lichtempfindlichen Kompositionen wird vermieden. Man erhält auf Grund der guten Filmbildungseigenschaften gleichmässige Beschichtungen, die nach der Belichtung und thermischer Nachbehandlung praktisch keinen Schichtdickenschwund aufweisen. Ferner sind die Lösungen lagerstabil und die erzeugten Bilder weisen auf den Substraten eine hohe Haftfestigkeit auf.

Die nachfolgenden Beispiele erläutern die Erfindung näher.

A) Herstellung der Polyimide

Die Polyimide werden wie in US-PS 3,856,752 beschrieben durch Umsetzung der entsprechenden Dianhydride und Diamine in N-Methylpyrrolidon (NMP) und durch anschliessende Imidisierung der erhaltenen Polyamidsäuren mit Acetanhydrid hergestellt.

Entsprechende höhermolekulare Polymere werden dann in der Weise gewonnem, dass man die erhaltenen Polymeren in einem Lösungsmittel (NMP, 4-Butyrolacton, Dimethylformamid, $CHCl_3$) löst und mit einem Nichtlösungsmittel (Toluol, Xylol, Ethanol) einer fraktionierten Fällung unterzieht. Solche und ähnliche Verfahren zur Trennung von Polymeren sind z. B. beschrieben im D. Braun et al. Praktikum der Makromolekularen Chemie, Dr. Alfred Hütig Verlag, 1971, S 95 ff.

Zur Charakterisierung der Polymeren dient die inhärente Viskosität ($\eta_{inh}$) 0,5%ige Lösungen in NMP bei 25° C.

Ausserdem werden die mittleren Molekulargewichte ($\bar{M}_w$) bestimmt, je nach Löslichkeit in THF durch Gelpermeationschromatographie und/oder mittels Messung der Lichtstreuung.

Die Gelpermeationschromatogramme werden aufgenommen mit einem Gerät der Firma Waters GmbH mit

einem Säulensatz von 2 x $10^6$ Å ($10^{-1}$ nm), 2 x $10^5$ Å ($10^{-1}$ nm), 2 x $10^4$ Å ($10^{-1}$ nm), 2 x $10^3$ Å ($10^{-1}$ nm) und 1 x 500 Å ($10^{-1}$ nm), wobei die Eichung mittels Polystyrolstandards definierter Molekulargewichte im Bereich 40 bis $10^7$ erfolgt.

Für die Bestimmung des mittleren Molekulargewichtes durch Lichtstreuung wird ein Lichtstreugerät KMX-6 der Firma Chromatix verwendet, wobei die Anregung mit Laserlicht von 633 nm erfolgt und die Vorwärtsstreuung im Winkelbereich 6-7° gemessen wird.

**Herstellungsbeispiel 1:**

20 g eines Polyimids, hergestellt aus Benzophenontetracarbonsäuredianhydrid (BTDA) und 5 (6)-Amino-1-(4'-aminophenyl)-1,3,3-timethyl-indan werden in 1200 4-Butyrolacton gelöst, gefiltert und bei 25°C langsam mit Toluol versetzt. Im Bereich Toluol:4-Butyrolacton = 2,3:1 bis 8:1 werden 7 Fraktionen mit unterschiedlichem Molekulargewicht isoliert, wovon 6 sowohl eine hohe Löslichkeit als auch eine gute Filtrierbarkeit besitzen.

**Tabelle 1 Ergebnis einer fraktionierten Fällung**

| Polyimid | Menge (g) | $\bar{M}_w$ | $\eta_{inh}$ | Verhältnis Fällmittel/ Lösungsmittel |
|---|---|---|---|---|
| Ausgangs-material | 20 | 58'000 | 0.68 | 2.324 |
| Fraktion 1 | 1.60 | 372.000 | 1.29 | 2.474 |
| " 2 | 2.41 | 184.000 | 0.90 | 2.658 |
| " 3 | 2.48 | 110.400 | 0.72 | 2.874 |
| " 4 | 2.48 | 72.600 | 0.58 | 3.124 |
| " 5 | 2.25 | 57.400 | 0.50 | 3.445 |
| " 6 | 5.13 | 41.700 | 0.41 | 4.445 |
| " 7 | 2.69 | 27.800 | 0.32 | 7.345 |

Lösungsmittel: 4-Butyrolacton
Fällmittel: Toluol

**Herstellungsbeispiel 2:**

20 g eines Polymeren, hergestellt aus Benzophenontetracarbonsäuredianhydrid und einem Gemisch aus 80 Molprozent 5 (6)-Amino-1-(4'-aminophenyl)-1,3,3-trimethylindan und 20 Molprozent Toluoldiamin (TDA) werden in 1100 g 4-Butyrolacton gelöst und bei 25°C langsam mit Toluol versetzt. Im Bereich Toluol:4-Butyrolacton = 1,2:1 bis 4,0:1 werden 5 Fraktionen mit unterschiedlichem Molekulargewicht isoliert, die eine hohe Löslichkeit und gute Filtrierbarkeit besitzen.

**Herstellungsbeispiel 3:**

20 g eines Polymeren, hergestellt aus Benzophenontetracarbonsäuredianhydrid (BTDA), 80 Molprozent Toluoldiamin und 20 Molprozent 4,4'-Diaminodiphenylmethan mit ($\eta_{inh}$ = 0,56, $\bar{M}_w$ = 35'000) werden in 2500 g 4-Butyrolacton gelöst, gefiltert und langsam mit Toluol versetzt. Im Bereich Toluol:4-Butyrolacton = 0,33:1 bis 1,3:1 werden 3 Fraktionen mit folgenden Eigenschaften isoliert:
Fraktion 1 (4,53 g): Löslich in NMP, unlöslich in 4-Butyrolacton, nicht filtrierbar
Fraktion 2 (3,97 g): Schnell löslich in NMP, langsam löslich in 4-Butyrolacton, gut filtrierbar ($\bar{M}_w$ = 77'000)
Fraktion 3 (10,10 g): Leicht löslich in NMP und 4-Butyrolacton, gut filtrierbar.

**Anwendungsbeispiele**

a) Herstellung von Beschichtungsmitteln und beschichteten Substraten
Im folgenden beziehen sich die Konzentrationen von Additiven jeweils auf die Masse des gelösten Polymeren. Bei Konzentrationsangaben für Lösungen werden nur die Anteile des Polymeren und des Lösungsmittels in Rechnung gestellt.

**Beispiel 1:**

4,88 g eines Polymeren, hergestellt aus Benzophenontetracarbonsäuredianhydrid und 5 (6)-Amino-1-(4'-aminophenyl)-1,3,3-trimethylindan mit einem Molekulargewicht von 144'000 werden mit 43,12 g 4-Butyrolacton versetzt und über Nacht unter Schütteln gelöst. Die Lösung hat bei 23° C eine Viskosität von 641 mPas. Sie wird mit 293 mg (6 %) von 2,6-Bis(4-azidobenzyliden)-4-methylcyclohexanon versetzt und mit 9,41 g 4-Butyrolacton weiter verdünnt. Anschliessend wird sie bei 3 bar Druck durch einen 0,45 µm Filter gefiltert. Die Lösung besitzt dann eine Viskosität von 228 mPas.

Beim Aufschleudern auf mit $SiO_2$ beschichtete Siliziumwafer wird bei einer Schleuderzeit von 20 sec eine Umdrehungsgeschwindigkeit von 1750 U/min benötigt, um eine 1 µm starke Schicht herzustellen.

**Beispiel 2:**

1,04 g eines Polymeren, hergestellt aus Benzophenontetracarbonsäuredianhydrid und 5 (6)-Amino-1-(4'-aminophenyl)-1,3,3-trimethylindan mit einem Molekulargewicht von 184'000 wird mit 10,52 g 4-Butyrolacton versetzt und über Nacht unter Schütteln gelöst.

Die Lösung hat eine Viskosität von 351 mPas. Sodann werden darin 73 mg (7,0 %) 2,6-Bis(4-azidobenzyliden)-4-methylcyclohexanon gelöst und die Mischung wird anschliessend bei 3 bar Druck durch einen 0,2 um Filter gefiltert. Eine 1 µm starke Schicht erhält man auf Siliziumwafern bei einer Schleudergeschwindigkeit von 2500 U/min.

B) Photostrukturierung auf beschichteten Substraten
Als Substrate dienen 3-Zoll Siliziumwafer mit einer Beschichtung von 0,1 µm $SiO_2$. Aufgeschleudert wird jeweils für 20 sec im Geschwindigkeitbereich von 1000 U/min bis 6000 U/min. Für vergleichende Messungen sind die Viskositäten der Lösungen und die Drehgeschwindigkeiten so abgestimmt, dass jeweils Schichten nahe 1 µm entstehen.

Die Trocknung der lichtempfindlichen Lackmischungen erfolgt für 5 bis 30 min in einem Umluftofen bei 40° bis 80° C.

Belichtet wird mit einer Maskenjustier- und Belichtungsmaschine der Firma Karl Süss bei einer Lichtleistung von 30 $mW/cm^2$, wobei die Lichtintensität mit Hilfe eines Intensitätsmessgerätes der Firma Optical Associates Inc. bestimmt wird. Die Angaben beziehen sich auf die Sonde von 365 nm. Zur Anwendung kommt eine Schwarzchrommaske, die Testmuster aller in der Halbleiterfertigung üblichen geometrischen Formen enthält, und zwar in der Grösse 1 µm, 2 µm, 3 µm.... 10 µm, 20 µm.... 100 µm. Obwohl auch bei Belichtungszeiten deutlich tiefer als im folgenden angegeben scharfe Bildstrukturen erzeugt werden können, sind hier nur diejenigen Zeiten angegeben, bei denen eine exakte 1:1 Abbildung aller geometrischen Figuren gleich oder grösser dem 4-fachen der Schichtdicke beobachtet wird (Gleichheit von Gräben und Stegen).

Entwickelt wird in einem Sprühentwickler bei 2 bar Druck und Umdrehungszahlen zwischen 500 und 2000 U/min, wobei Entwicklungszeiten zwischen 2 und 20 sec nötig sind.

Ein Profilometer der Firma Tencor (Alpha-Step) dient zur Bestimmung der Schichtdicken.

**Beispiel 3:**

Von einem Polyimid aus Benzophenontetracarbonsäuredianhydrid und 5 (6)-Amino-1-(4'-aminophenyl)-1,3,3-trimethylindan, das ein mittleres Molekulargewicht $\bar{M}_w$ von 144'000 besitzt, wird eine 8,5 %ige Lösung in 4-Butyrolacton hergestellt. Die Lösung wird mit 6 % 2,6-Bis-(p-azido-benzyliden)-4-methylcyclohexanon (Bisazid Nr. 1) versetzt, gefiltert und bei 1750 U/min und 20 sec auf mit $SiO_2$ beschichtete 3-Zoll Wafer aufgeschleudert. Die Vortrocknung erfolgt für 20 min bei 60°C im Umluftofen. Belichtet wird sodann für 65 sec im Vakuumkontakt mit zusätzlicher $N_2$-Begasung. Die Entwicklung vollzieht sich nach folgendem Programm:
(Sprühentwicklung bei 2 bar mit 1000 U/min):
Methylenchlorid/Toluol (68:32) 8 sec
Methylenchlorid/Toluol (34:66) 3 sec
Toluol 10 sec
Alle Strukturen von 5 µm und grösser sind scharf und in einem Verhältnis von 1:1 (Stege zu Gräben) abgebildet. Die Schichtdicke beträgt 1,02 µm.
Die beschichteten Wafer werden daraufhin in einen Temperaturofen gebracht, unter Stickstoffatmosphäre innert einer Stunde auf 400°C erhitzt, bei 400°C für 15 min belassen und dann abgekühlt.
Bei der Inspektion mit einem hochauflösenden Mikroskop sind keinerlei Veränderungen der Struktur zu erkennen. Die erneute Messung der Schichtdicke ergibt einen Wert von 0,96 µm.
Die beschichteten Wafer werden in einem Ultraschallbad 10 min lang 80°C heissem NMP ausgesetzt. Die Strukturen erweisen sich dieser Behandlung gegenüber als inert.

**Beispiel 4:**

Die 8,5 %ige Lösung des Polyimids aus Beispiel 3 wird mit 5,77 % 2,6-Bis-(p-azidobenzyliden)-cyclohexanon (Bisazid Nr. 2) versetzt, gefiltert und ebenfalls bei 1750 U/min und 20 sec auf mit $SiO_2$ beschichtete 3-Zollwafer aufgeschleudert. Belichtet und entwickelt wird nach demselbem Programm wie in Beispiel 3.
Es ist ebenfalls eine Belichtungszeit von 65 sec nötig, um scharfe Strukturen der Grösse 5 µm und grösser zu erzeugen.

**Beispiel 5:**

Die 8,5 %ige Polymerlösung aus Beispiel 3 wird mit 6 % Bis-(4-azido-phenylketon) versetzt. Die Herstellung der Bildstrukturen erfolgt wie in Beispiel 3 beschrieben. Es muss 320 sec belichtet werden, um scharfe Strukturen herzustellen.

**Beispiel 6:**

Von einem Polymeren aus Benzophenontetracarbonsäuredianhydrid und 5 (6)-Amino-1-(4'-aminophenyl)-1,3,3-trimethylindan mit einem mittleren Molekulargewicht von 184'000 wird eine 9 %ige Lösung in 4-Butyrolacton hergestellt, mit 7 % des Bisazids Nr. 1 versetzt und gefiltert.
Nach dem Aufschleudern bei 6000 U/min und 20 sec auf eine mit $SiO_2$ beschichtete Wafer und Trocknen der Lackschichten für 10 min bei 60°C erfolgt die Belichtung im Vakuumkontakt. Entwickelt wird wie folgt:
Methylenchlorid/Toluol 68:32 3 sec
Methylenchlorid/Toluol 34:66 3 sec
Toluol 10 sec
Es wird eine Belichtungszeit von nur 16 sec benötigt, um scharf aufgelöste Strukturen zu erzeugen. Auch die Strukturen von 2 µm Grösse sind scharf aufgelöst. Die Schichtdicke beträgt 0,38 µm und nach dem Erhitzen auf 400°C unter $N_2$-Atmosphäre ergibt sich eine Stärke von 0,35 µm.

**Beispiel 7:**

Von einem Polymeren aus Benzophenontetracarbonsäuredianhydrid, 80 Molprozent 5 (6)-Amino-1-(4'-aminophenyl)-1,3,3-trimethylindan und 20 Molprozent Diaminotoluol, das ein Molekulargewicht von 95'000 besitzt, wird eine 8,7 %ige Lösung in 4-Butyrolacton hergestellt, der 7 % des Bisazides Nr. 1 beigegeben wird.
Die gefilterte Lösung wird mit 1 800 U/min auf eine Wafer aufgeschleudert und 120 sec belichtet.
Die Entwicklung erfolgt nach dem Programm:
Methylenchlorid/Toluol 80:20 8 sec

Methylenchlorid/Toluol 40:60 3 sec
Toluol 10 sec
Es werden scharfe Strukturen mit einer Schichtdicke von 0,97 µm und einer Auflösung von 4 µm gewonnen.
Nach dem Erhitzen auf 400° C beträgt die Schichtdicke 0,91 µm.

**Beispiel 8:**

Von einem Polymeren aus Pyromellitsäuredianhydrid (PMDA) und 5 (6)-Amino-1-(4'-aminophenyl)-1,3,3-trimethylindan mit einem Molekulargewicht von 60'000 und dem Bisazid Nr. 1 wird eine 9 %ige Lösung in 4-Butyrolacton hergestellt und bei 1 700 U/min auf 3-Zollwafer aufgeschleudert.
Nach Belichtung im Vakuumkontakt für 200 sec wird wie folgt entwickelt:
Methylenchlorid/Toluol 65:35 8 sec
Methylenchlorid/Toluol 32:68 3 sec
Toluol 10 sec
Im zentralen Teil des Wafers befinden sich scharfe Reliefstrukturen. Die Strukturen der äusseren Partien des Wafers (äusseres Drittel des Radius) sind jedoch unterbelichtet.
Die Reliefstrukturen der inneren Partien haben eine Schichtdicke von 0,92 µm. Nach dem Erhitzen auf 400° C beträgt die Schichtdicke 0,75 µ

**Beispiel 9:**

Auf die in Beispiel 8 beschriebenen Wafer wird nach der Beschichtung eine zusätzliche dünne Schicht von Polyvinylalkohol aufgesponnen, und zwar durch Aufspinnen einer Lösung mit folgender Zusammensetzung bei 4500 U/min:
Polyvinylalkohol (Mowiol 488, Hoechst) 5 %
Alkylphenylpolyäthylenglykol (Triton X-100, Röhm und Haas) 0,05 %
Wasser 94,95 %
Die Dicke der Polyvinylalkoholschicht beträgt 0,1 µm.
Die Wafer werden 220 sec lang belichtet, mit heissem Wasser besprüht, getrocknet und gemäss Beispiel 8 entwickelt.
Im Gegensatz zu dem Ergebnis in Beispiel 8 sind die Wafer nun über die gesamte Fläche mit gleichmässig belichteten Reliefstrukturen bedeckt.

**Beispiel 10:**

Von einem Polymeren aus Benzophenontetracarbonsäuredianhydrid und 5(6)-Amino-1-(4'-aminophenyl)-1,3,3-trimethylindan mit einem mittleren Molekulargewicht von 184 000 wird eine 9,0 %ige Lösung in 4-Butyrolacton hergestellt, mit 7 % 2,6-Bis-(4-azidobenzyliden)-4-methylcyclohexan-1-on versetzt und auf 0,2 µm gefiltert. Nach dem Aufschleudern auf mit $SiO_2$ beschichtete 3-Zoll Wafer bei 2 500 U/min und 20 sec erfolgt die Trocknung der Lackschichten im Umluftofen bei 60° während 20 min. Es wird 52 sec lang im Vakuumkontakt durch eine Schwarzchrommaske belichtet und dann nach folgendem Programm entwickelt (Sprühentwickler, 2 bar Druck, 1000 U/min):
Methylenchlorid/Toluol 68:32 10 sec
Methylenchlorid/Toluol 34:66 3 sec
Toluol 10 sec
Die erhaltenen scharfen Reliefstrukturen haben eine Dicke von 1,05 µm und zeigen eine Auflösung von 5 µm, wobei ein genaues Abbildungsverhältnis aller Gräben und Stege von 1:1 gegeben ist.
Nach dem Aufheizen der Wafer im Temperofen auf 400°C unter Stickstoffatmosphäre sind keine strukturellen Veränderungen zu erkennen, und die Schichtdicke beträgt dann 1,00 µm.

**Beispiel 11:**

Von einem Polymeren aus Benzophenontetracarbonsäuredianhydrid und 80 Molprozent 5(6)-Amino-1-(4'-aminophenyl)-1,3,3-trimethylindan sowie 20 Molprozent Toluoldiamin, mit einem Molekulargewicht von 174 000 wird eine 7 %ige gefilterte Lösung in 4-Butyrolacton hergestellt, die 7 % des 2,6-Bis(4-azidobenzyliden)-4-methylcyclohexanon enthält. Die Lösung wird bei 1 250 U/min auf eine 3-Zoll Wafer aufgeschleudert, bei 60° C für 20 min im Umluftofen getrocknet und 70 sec lang im Vakuumkontakt belichtet.

Das Entwicklungsprogramm im Sprühentwickler bei 2 bar Druck und 1000 U/min ist wie folgt:
Methylenchlorid/Toluol 80:20 8 sec
Methylenchlorid/Toluol 40:60 3 sec
Toluol 10 sec
Die scharf abgebildeten Reliefstrukturen haben eine Schichtdicke von 0,98 µm und eine Auflösung von 4 µm. Teilweise sind auch die 3 µm-Strukturen scharf aufgelöst. Nach dem Erhitzen auf 400°C unter Stickstoffatmosphäre beträgt die Endschichtstärke 0,92 µm.

**Beispiel 12:**

Ein Polyimid, hergestellt aus Benzophenontetracarbonsäuredianhydrid, 80 Mol% Toluoldiamin und 20 Mol% 4,4'-Diaminodiphenylmethan ($\bar{M}_w$ = 35'000) wird in 4-Butyrolacton gelöst und mit 7 % Bisazid No. 1 versetzt und gefiltert. Die 10 %ige Lösung besitzt eine Viskosität von 374 mPas. Nach Aufschleudern bei 3 400 U/min und 20 minütiger Trockung wird für 150 sec im Vakuumkontakt belichtet. Es entstehen Strukturen von 0,93 µm Schichtdicke. Nach dem Erhitzen auf 400°C beträgt die Schichtdicke 0,73 µm.

**Beispiel 13:**

Die Polymerfraktion 2 aus Herstellungsbeispiel 3 (mit $\bar{M}_w$ = 77'000) wird zusammen mit 7 % des Bisazides Nr. 1 zu einer 10 %igen Lösung in 4-Butyrolacton verarbeitet. Die Beschichtung der Wafer erfolgt bei 2 200 U/min. Nach dem Trocknen bei 20°C ist eine Belichtungszeit von nur 13 sec nötig, um scharfe Strukturen mit einer Schichtdicke von 0,94 µm und einer Auflösung von 3 µm zu erzeugen. Angewendet wird dabei folgendes Entwicklungspiogramm im Sprühentwickler:
NMP 14 sec
NMP/Toluol 1:1 3 sec
Toluol 10 sec
Nach dem Erhitzen auf 400°C beträgt die Schichtdicke noch 0,80 µm. Form und Oberfläche der Strukturen verändern sich durch 10 minütiges Behandeln mit 80°C heissem NMP im Ultraschallbad nicht.

**Beispiel 14:**

Von einem Polyimid, hergestellt aus Benzophenontetracarbonsäuredianhydrid und einem Isomerengemisch von in 2- oder in 2,2'-Position mit Äthyl substituierten Derivaten des 4,4'-Diaminophenylmethans, ($\bar{M}_w$ = 45 000), wird mit Zusatz von 7 % des Bisazides Nr. 1 eine 6,0 %ige Lösung hergestellt. Nach der Filtration wird bei 1 450 U/min auf Wafer aufgeschleudert Nach der Trocknung wird 13 sec lang belichtet und wie folgt entwickelt:
NMP/Toluol 80:20 5 sec
NMP/Toluol 40:60 3 sec
Toluol 10 sec
Es entstehen sehr scharfe Strukturen mit einer Auflösung von 2-3 µm und einer Schichtdicke von 0,98 µm.
Nach dem Erhitzen auf 400°C beträgt die Schichtdicke noch 0,77 µm.

**Beispiel 15:**

Ein Polyimid aus Benzophenontetracarbonsäuredianhydrid und 3,3'-Dimethyl-4,4'-diaminodiphenylmethan mit einem mittleren Molekulargewicht $\bar{M}_w$ = 44'000 wird in 4-Butyrolacton gelöst. Die 7 %ige Lösung wird mit 7 % des Bisazides Nr. 1 versetzt und durch einen 0,45 µm Filter gefiltert. Bei 23°C hat die Lösung eine Viskosität von 335 mPas. Die Beschichtung der mit $SiO_2$ beschichteten 3-Zoll Wafer erfolgt bei 2 350 U/min, die Trocknung für 17 min bei 60°C. Die Entwicklung erfolgt nach folgendem Programm:
Sprühentwickler, 2 bar, 1000 U/min:
NMP/Toluol 80:20 5 sec
NMP/Toluol 40:60 3 sec
Toluol 10 sec.
Bei einer Lichtleistung von 30 $mW/cm^2$ ist nur eine Belichtungszeit von 8 sec (240 $mJ/cm^2$) nötig, um sehr scharf aufgelöste Strukturen (2 µm Auflösung) der Schichtdicke 0,92 µm zu erzeugen.
Die mit Photostrukturen bedeckten Wafer werden in einen Temperofen gegeben, innert 1 h auf 400°C erhitzt, dort für 15 min belassen und dann abgekühlt.

Unter einem hochauflösenden Mikroskop sind praktisch keine Veränderungen der Strukturen zu erkennen und die erneute Messung der Schichtdicke gibt einen Wert von 0,84 µm.

Zuletzt werden die getemperten Reliefstrukturen 10 min lang 80°C heissem NMP im Ultraschallbad ausgesetzt. Im Mikroskop sind danach weder Beschädigungen der Oberfläche noch geometrische Verformungen festzustellen.

Die in den obigen Ausführungen genannten Warenzeichen werden als solche anerkannt.

**Patentansprüche**

1. Strahlungsempfindliches Beschichtungsmittel, enthaltend neben üblichen Zusätzen (a) ein organisches Lösungsmittel, (b) ein in diesem Lösungsmittel lösliches Homo- oder Copolyimid aus aromatischen Tetracarbonsäuren und aromatischen Diaminen oder aromatischen und aliphatischen Diaminen, wobei an mindestens einen Teil der Tetracarbonsäurereste, der aromatischen Diaminreste oder beider Reste mindestens eine aliphatische Gruppe direkt oder über eine Brückengruppe gebunden ist und/oder mindestens ein Teil dieser Reste als aliphatische Brückengruppe Alkylen, Alkyliden, Cycloalkyliden oder $Si(Alkyl)_2$ enthält, und (c) mindestens 0,1 Gew.-%, bezogen auf die Komponente (b), mindestens eines organischen chromophoren Polyazides, in dem die Azidgruppen an aromatische Kohlenwasserstoffreste gebunden sind.

2. Beschichtungsmittel gemäss Anspruch 1, dadurch gekennzeichnet, dass die Reste mit aliphatischen Gruppen und/oder Brückengruppen zu mindestens 10 Mol-% im Polyimid oder Copolyimid enthalten sind, bezogen auf das Polyimid.

3. Beschichtungsmittel gemäss Anspruch 1, dadurch gekennzeichnet, dass die aliphatische Gruppe Alkyl-Q- mit 1 bis 6 C-Atomen in der Alkylgruppe darstellt, worin Q eine direkte Bindung, -O-, -S-, -SO-, $-SO_2-$, -CO-, -NH-, -N-Alkyl- mit 1-6 C-Atomen oder -NHCO- ist und die Brückengruppe Alkylen, Methylen oder Äthylen, als Alkyliden, Äthyliden, 1,1- oder 2,2-Propyliden oder 1,1- oder 2,2-Butyliden, als Cycloalkyliden, Cyclopentyliden oder Cyclohexyliden und als $Si(Alkyl)_2$, $Si(Methyl)_2$ oder $Si(Äthyl)_2$ bedeutet.

4. Beschichtungsmittel gemäss Anspruch 3, dadurch gekennzeichnet, dass die aliphatische Gruppe Methyl oder Methoxy und die Brückengruppe Methylen, 2,2-Propyliden oder $Si(Methyl)_2$ ist.

5. Beschichtungsmittel gemäss Anspruch 1, dadurch gekennzeichnet, dass das Homo- oder Copolyimid (b) im wesentlichen aus wiederkehrenden Struktureinheiten der Formel (I)

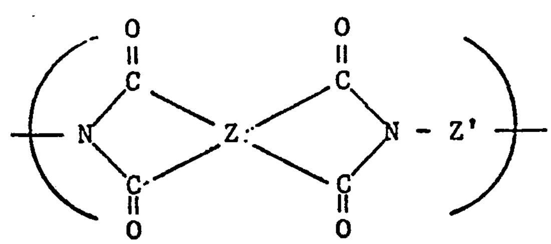

(I)

besteht, worin die vier Carbonylgruppen an verschiedene Kohlenstoffatome gebunden sind und je zwei Carbonylgruppen in ortho- oder peri-Stellung zueinander stehen,

Z einen vierwertigen Rest bedeutet, der mindestens einen aromatischen Ring enthält und

Z' einen zweiwertigen organischen Rest darstellt, ausgewählt unter aromatischen, alkylaromatischen, aliphatischen, cycloaliphatischen und heterocyclischen Resten; Kombinationen davon und Resten mit Sauerstoff, Schwefel, Stickstoff, Silicium oder Phosphor enthaltenden Brückengruppen,

mit der Massgabe, dass

1) aus der Gesamtzahl der wiederkehrenden Polyimid-Einheiten

A) in 0 bis 100 Mol-% solcher Einheiten Z ein Phenylindanrest der Strukturformel

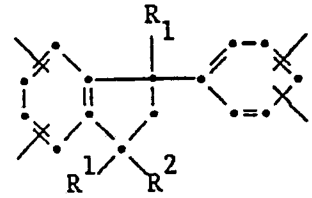

(II)

ist, worin $R_1$ Wasserstoff oder einen Alkylrest mit 1 bis 5 Kohlenstoffatomen und $R_2$ einen Alkylrest mit 1 bis 5 Kohlenstoffatomen bedeuten, und

B) in 0 bis 100 Mol-% solcher Einheiten Z' ein Phenylindanrest der Strukturformel (III)

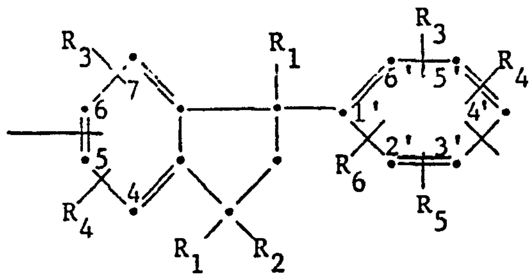

(III)

ist, worin $R_1$ Wasserstoff oder einen Alkylrest mit 1 bis 5 Kohlenstoffatomen und $R_2$ einen Alkylrest mit 1 bis 5 Kohlenstoffatomen darstellt und $R_3$, $R_4$, $R_5$ und $R_6$ unabhängig voneinander Wasserstoff, Halogen, Alkoxy oder einen Alkylrest mit 1 bis 4 Kohlenstoffatomen bedeuten und

2) aus der Gesamtzahl der Reste Z und Z' mindestens 10 Mol-%, bezogen auf die Einzelkomponenten, Phenylindanreste sind.

6. Beschichtungsmittel gemäss Anspruch 5, dadurch gekennzeichnet, dass $R_2$ in den Formeln II und III Methyl ist.

7. Beschichtungsmittel gemäss Anspruch 5, dadurch gekennzeichnet, dass in dem Polyimid 0 bis 100 Mol-% der Reste Z der Formel

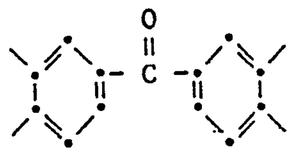

oder der Formel

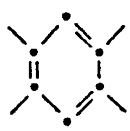

entsprechen, während 100 bis 0 Mol-% der Reste Z eine Mischung aus

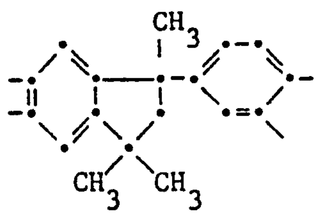

und

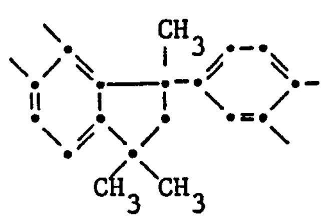

bedeuten und dass 100 bis 10 Mol-% der Reste Z' gleich einem Rest der Formel III sind worin $R_1$, $R_3$, $R_4$, $R_5$ und $R_6$ unabhängig voneinander Wasserstoff oder Methyl und $R_2$ Methyl bedeuten, während 0 bis 90 Mol-% der Reste Z' der Formel

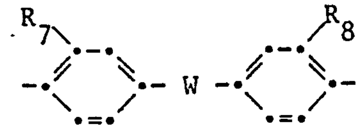 oder 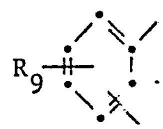

entsprechen, worin W eine covalente Bindung, Methylen, Äthyliden, 2,2-Propyliden, Cyclohexyliden, Schwefel, Sauerstoff oder Sulfon bedeutet, $R_7$ und $R_8$ unabhängig voneinander Wasserstoff, Halogen, Alkoxy oder Alkylgruppen mit 1 bis 5 Kohlenstoffatomen darstellen und $R_9$ Wasserstoff, Halogen, Alkoxy oder eine Alkylgruppe mit 1 bis 5 Kohlenstoffatomen bedeutet.

8. Beschichtungsmittel gemäss Anspruch 5, dadurch gekennzeichnet, dass in den Polyimiden Z'

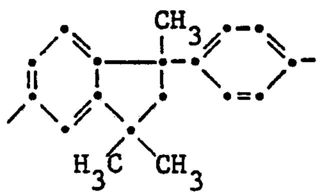 oder 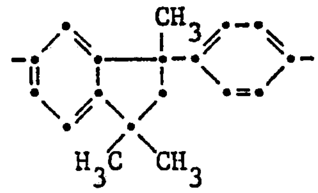

oder eine Mischung davon ist und Z

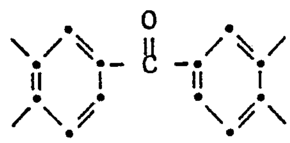 oder 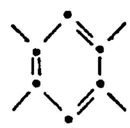

oder eine Mischung davon bedeutet.

9. Beschichtungsmittel gemäss Anspruch 1, dadurch gekennzeichnet, dass das Homo- oder Copolyimid (b) im wesentlichen aus wiederkehrenden Struktureinheiten der Formel (I)

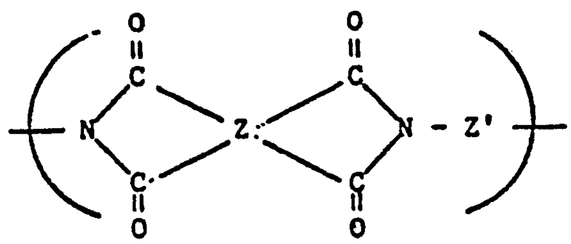 (I)

besteht, worin die vier Carbonylgruppen an verschiedene Kohlenstoffatome gebunden sind und je zwei Carbonylgruppen in ortho- oder peri-Stellung zueinander stehen,

Z einen vierwertigen Rest bedeutet, der mindestens einen aromatischen Ring enthält und

Z' einen zweiwertigen organischen Rest darstellt, ausgewählt unter aromatischen, alkylaromatischen, aliphatischen, cycloaliphatischen und heterocyclischen Resten, Kombinationen davon und Resten mit Sauerstoff, Schwefel, Stickstoff, Silicium oder Phosphor enthaltenden Brückengruppen,

mit der Massgabe, dass aus der Gesamtzahl der wiederkehrenden Polyimideinheiten, bezogen auf die Tetracarbonsäureanhydridreste bzw. Diaminreste,

A) 30-100 Mol-% solcher Einheiten Z Benzophenontetracarbonsäurereste darstellen, und

B) 30-100 Mol-% solcher Einheiten Z' Reste der Formeln

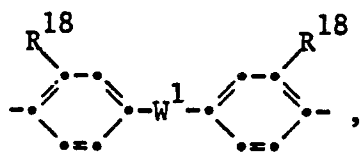 ,

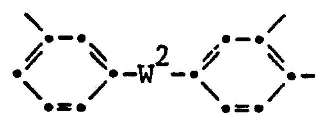 oder 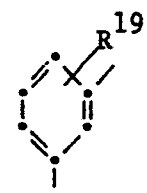

sind, worin
$W^1$ $CH_2$, O, S, $SO_2$, CO oder 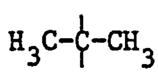

$W^2$ $CH_2$, S, SO, CO oder 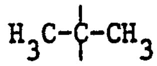

$R^{18}$ Alkyl oder Alkoxy mit 1 bis 6 C-Atomen, Halogen, besonders Cl, $CO_2H$, OH, $SO_3H$ oder $NHCOCH_3$ und $R^{19}$ Alkyl mit 1 bis 6 C-Atomen bedeutet, wobei mindestens 10 Mol-% dieser Reste solche mit $CH_2$,

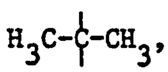,

Alkyl, Alkoxy oder $NHCOCH_3$-Gruppen sind.

10. Beschichtungsmittel gemäss Anspruch 8, worin $R^{18}$ und $R^{19}$ für Methyl stehen.

11. Beschichtungsmittel gemäss Anspruch 8, worin $W^1$ und $W^2$ $CH_2$ bedeuten.

12. Beschichtungsmittel gemäss Anspruch 1, dadurch gekennzeichnet, dass das Homo- oder Copolyimid (b) im wesentlichen aus wiederkehrenden Struktureinheiten der Formel (I) besteht,

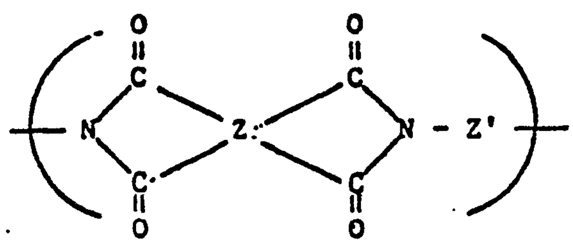 (I)

worin, bezogen auf die Tetracarbonsäureanhydridreste bzw. Diaminreste,
A) 75 bis 100 Mol-% der Einheiten Z ein Pyromellitsäureanhydridrest ist, und
B) 25 bis 0 Mol-% der Einheiten der Formel

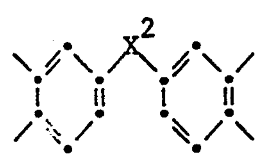

entsprechen, worin $X^2$ für O, $SO_2$ und besonders CO steht, sowie
C) 10 bis 35 Mol-% Einheiten Z' der Formel

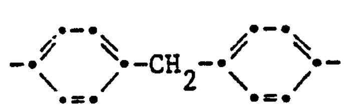

und 90 bis 65 Mol-% der Einheiten Z' der Formeln

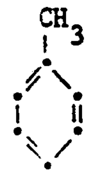 oder 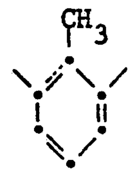

oder Mischungen davon entsprechen.

13. Beschichtungsmittel gemäss Anspruch 1, dadurch gekennzeichnet, dass das Copolyimid (b) im wesentlichen aus wiederkehrenden Struktureinheiten der Formel (I)

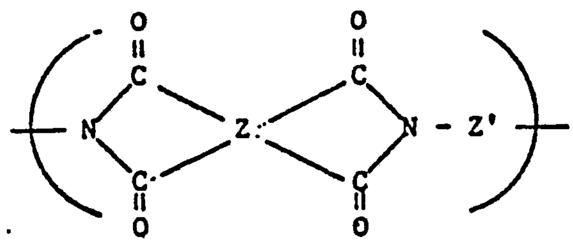 (I)

besteht, worin

A) Z einen Benzophenontetracarbonsäuredianhydridrest, und

B) bezogen auf die Diaminreste 10-30 Mol-% der Einheiten Z' der Formel

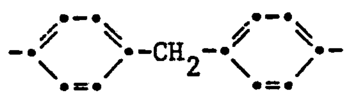 und

C) 90-70 Mol-% der Einheiten Z'

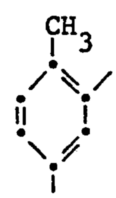 oder 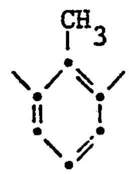

oder Mischungen davon entsprechen.

14. Beschichtungsmittel gemäss Anspruch 1, dadurch gekennzeichnet, dass es 99,9 bis 20 Gew.% des Polyimides (b) und 0,1 bis 20 Gew.% des Bisazides (c) enthält, bezogen auf die Bestandteile (b) und (c).

15. Beschichtungsmittel gemäss Anspruch 1, dadurch gekennzeichnet, dass das Lösungsmittel ein polares aprotisches Lösungsmittel ist.

16. Beschichtungsmittel gemäss Anspruch 1, dadurch gekennzeichnet, dass das chromophore Polyazid ein Diazid der Formel

$N_3$-E-$(Y)_q$-E-$N_3$

ist, worin E für einen aromatischen Kohlenwasserstoffrest und q für 0 oder 1 stehen und Y eine Gruppe ist, die zusammen mit den aromatischen Kohlenwasserstoffresten E ein mesomeres System bildet.

17. Beschichtungsmittel gemäss Anspruch 16. worin Y für O, CO, S, SO, $SO_2$, NR' mit R' gleich Wasserstoff, Alkyl, Cycloalkyl, Aryl oder Aralkyl,

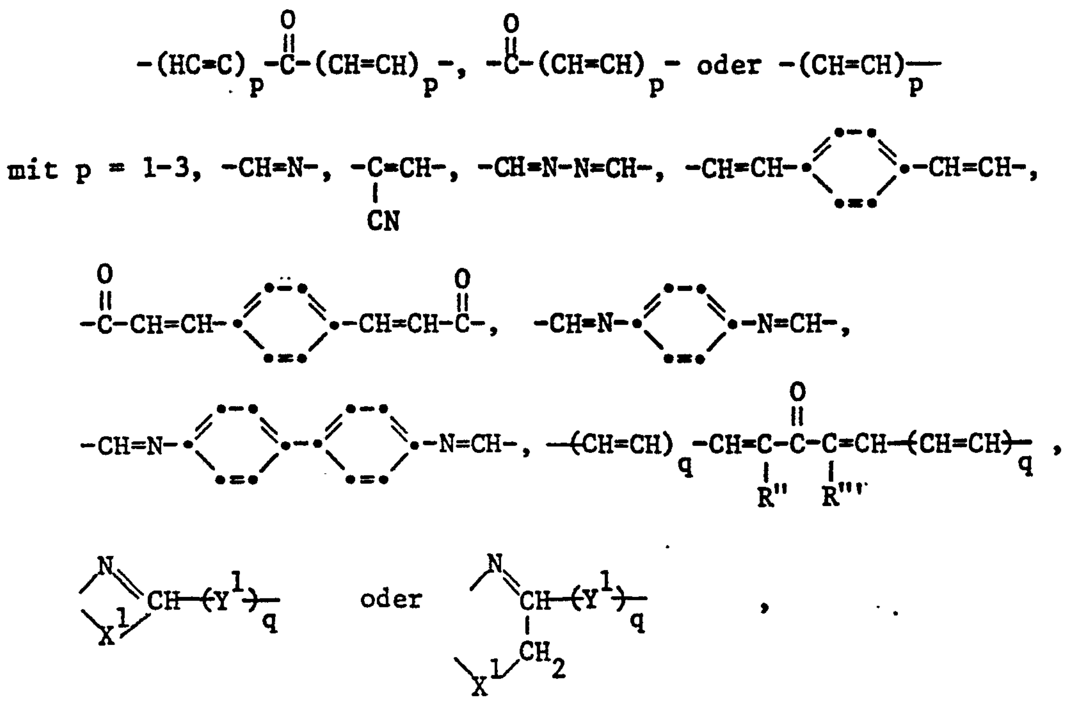

oder

mit p = 1-3,

oder

steht, worin R" und R‴ unabhängig voneinander Alkyl mit 1 bis 5 C-Atomen oder R" und R‴ zusammen unsubstituiertes oder mit Alkyl, Hydroxyalkyl, Alkoxy, Trialkylsilyl, Hydroxy, Carboxyl, Alkoxycarbonyl, Amino, Alkylamino oder Dialkylamino substituiertes Äthylen oder Trimethylen bedeuten, q 0 oder 1 ist, $X^1$ für O, S oder NH steht, $Y^1$ unabhängig die gleiche Bedeutung wie Y hat und die freien Bindungen an N und $X_1$ zusammen mit der Gruppe E einen kondensierten heterocyclischen Ring bilden.

18. Beschichtungsmittel gemäss den Ansprüchen 5 und 7, dadurch gekennzeichnet, dass das Polyazid 2,6-Bis((4-p-azidophenyl)-methin)cyclohexan-1-on ist.

19. Photographisches Aufzeichnungsmaterial für Reliefabbildungen aus einem Träger und einer strahlungsempfindlicher Schicht, auf dem als strahlungsempfindliche Schicht eine Mischung des Polyimides (b) und Polyazides (c) gemäss Anspruch 1 aufgebracht ist.

20. Verwendung von Beschichtungsmitteln gemäss Anspruch 1 zum Aufbringen von Isolier- und Schutzlacken und zur Herstellung von gedruckten Schaltungen und von integrierten Schaltkreisen.

**Claims**

1. A radiation-sensitive coating agent which, in addition to customary additives, contains (a) an organic solvent, (b) a homopolyimide or copolyimide which is soluble in this solvent and is formed from aromatic tetracarboxylic acids and aromatic diamines or aromatic and aliphatic diamines, where at least one aliphatic group is bonded direct or via a bridging group to at least some of the tetracarboxylic acid ra_licals, of the aromatic diamine radicals, or the two radicals and/or at least some of these radicals contain as an aliphatic bridging group alkylene, alkylidene, cycloalkylidene or $Si(alkyl)_2$ and (c) at least 0.1 % by weight, based on component (b), of at least one organic chromophoric polyazide in which the azide groups are bonded to aromatic hydrocarbon radicals.

2. A coating agent according to claim 1, wherein the polyimide or copolyimide contains at least 10 mol%, based on the polyimide, of radicals having aliphatic groups and/or bridging groups.

3. A coating agent according to claim 1, wherein the aliphatic group is alkyl-Q-, in which the alkyl moiety contains 1 to 6 C atoms and Q is a direct bond, -O-, -S-, -SO-, $-SO_2-$, -CO-, -NH-, -N-alkyl having 1-6 C atoms or -NHCO-, and the bridging group as alkylene is methylene or ethylene, as alkylidene is ethylidene, 1,1- or 2,2-propylidene or 1,1- or 2,2-butylidene, as cycloalkylidene is cyclopentylidene or cyclohexylidene and as $Si(alkyl)_2$ is Si(methyl)2 or $Si(ethyl)_2$.

4. A coating agent according to claim 3, wherein the aliphatic group is methyl or methoxy and the bridging group is methylene, 2,2-propylidene or $Si(methyl)_2$.

5. A coating agent according to claim 1, wherein homopolyimide or copolyimide (b) essentially consists of recurring structural units of the formula (I)

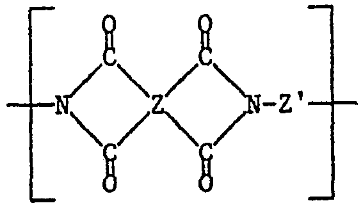

(I)

in which the four carbonyl groups are bonded to different carbon atoms and any two carbonyl groups are in ortho- or peri-position relative to each other, Z is a tetravalent radical which contains at least one aromatic ring and Z' is a divalent organic radical selected from aromatic, alkyl-aromatic, aliphatic, cycloaliphatic and heterocyclic radicals, combinations thereof and radicals with bridging groups containing oxygen, sulfur, nitrogen, silicon or phosphorus, with the proviso that

1) out of the total number of recurring polyimide units

A) in 0 to 100 mol% of such units Z is a phenylindane radical of the structural formula

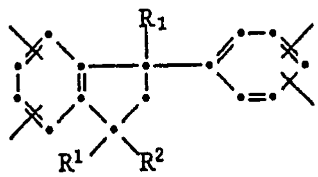

(II)

in which $R_1$ is hydrogen or an alkyl radical having 1 to 5 carbon atoms and $R_2$ is an alkyl radical having 1 to 5 carbon atoms, and

B) in 0 to 100 mol% of such units Z' is a phenylindane radical of the structural formula (III)

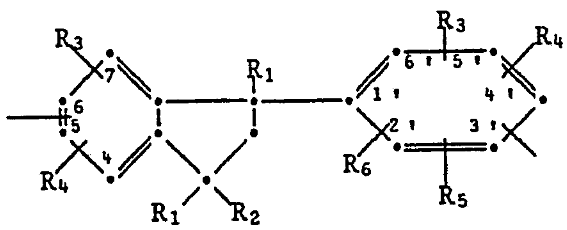

(III)

in which $R_1$ is hydrogen or an alkyl radical having 1 to 5 carbon atoms, $R_2$ is an alkyl radical having 1 to 5 carbon atoms, and $R_3$, $R_4$, $R_5$ and $R_6$ are each independently hydrogen, halogen, alkoxy or an alkyl radical having 1 to 4 carbon atoms and

2) of the total number of radicals Z and Z' at least 10 mol%, based on the individual components, are phenylindane radicals.

6. A coating agent according to claim 5, wherein $R_2$ in the formulae II and III is methyl.

7. A coating agent according to claim 5, wherein 0 to 100 mol% of the radicals Z correspond to the formula

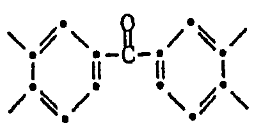

or to the formula

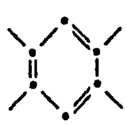

while 100 to 0 mol% of the radicals Z are a mixture of

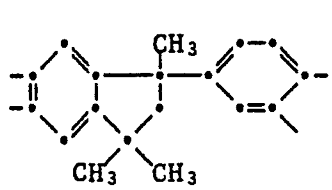

and

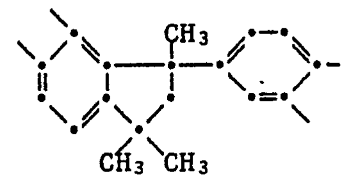

and wherein 100 to 10 mol% of the radicals Z' correspond to a radical of the formula III, in which $R_1$, $R_3$, $R_4$, $R_5$ and $R_6$ are each independently hydrogen or methyl and $R_2$ is methyl, while 0 to 90 mol% of the radicals Z' have the formula

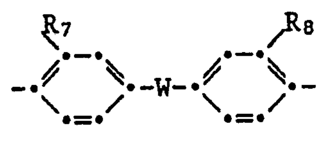

or

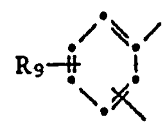

in which W is a covalent bond methylene ethylidene, 2,2-propylidene, cyclohexylidene, sulfur, oxygen or sulfone $R_7$ and $R_8$ are each independently of the other hydrogen, halogen, alkoxy or alkyl groups of 1 to 5 carbon atoms and $R_9$ is hydrogen, halogen, alkoxy or an alkyl group having 1 to 5 carbon atoms.

8. A coating agent according to claim 5, wherein Z' is

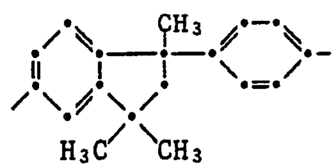

or

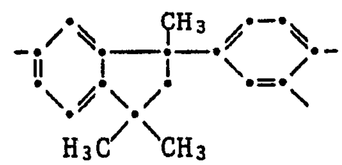

or a mixture thereof and Z is

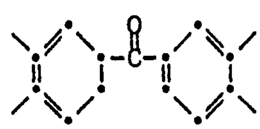

or

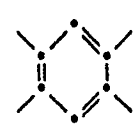

or a mixture thereof.

9. A coating agent according to claim 1, wherein the homopolyimide or copolyimide (b) essentially consists of recurring structural units of the formula (I)

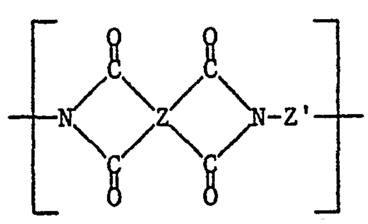

(I)

in which the four carbonyl groups are bonded to different carbon atoms and any two carbonyl groups are in ortho- or peri-position relative to each other, Z is a tetravalent radical which contains at least one aromatic ring and Z' is a divalent organic radical selected from aromatic, alkyl-aromatic, aliphatic, cycloaliphatic and heterocyclic radicals, combinations thereof and radicals with bridging groups containing oxygen, sulfur, nitrogen, silicon, or phosphorus, with the proviso that, of the total number of recurring polyimide units, based on the tetracarboxylic anhydride radicals or diamine radicals,

A) 30-100 mol% of such units Z are benzophenonetetracarboxylic radicals and

B) 30-100 mol% of such units Z' are radicals of the formulae

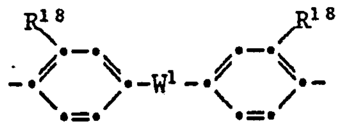

,

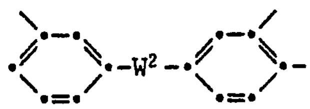

or

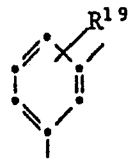

in which

$W^1$ is $CH_2$, O, S, $SO_2$, CO or 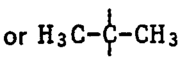,

$W^2$ is $CH_2$, S, $SO_2$, CO or 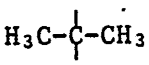,

FIG73/10

$R^{18}$ is alykl or alkoxy having 1 to 6 C atoms, halogen, in particular Cl, $CO_2H$, OH, $SO_3H$ or $NHCOCH_3$ and $R^{19}$ is alkyl having 1 to 6 C atoms, at least 10 mol% of which radicals are those containing $CH_2$

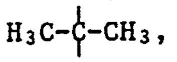,

alkyl, alkoxy or $NHCOCH_3$ groups.

10. A coating agent according to claim 8, wherein $R^{18}$ and $R^{19}$ are methyl.

11. A coating agent according to claim 8, wherein $W^1$ and $W^2$ are $CH_2$.

12. A coating agent according to claim 1, in which homopolyimide or copolyimide (b) essentially consists of recurring structural units of the formula (I)

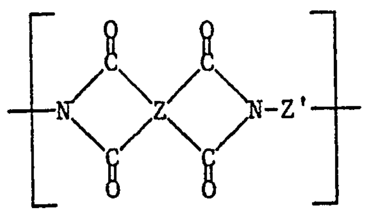

(I)

in which, based on the tetracarboxylic anhydride radical or diamine radicals

A) 75 to 100 mol% of the units Z are a pyromellitic anhydride radical and

B) 25 to 0 mol% of the units have the formula

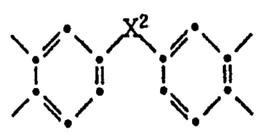

in which $X^2$ is O, $SO_2$ or, in particular CO, and

C) 10 to 35 mol% of the units Z' have the formula

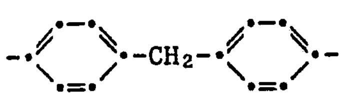

and 90 to 65 mol% of the units Z' have the formulae

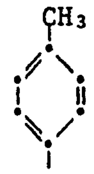 or 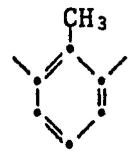

or mixtures thereof.

13. A coating agent according to claim 1, wherein the copolyimide (b) essentially consists of recurring structural units of the formula (I)

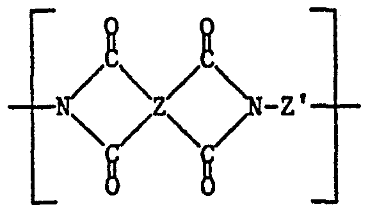 (I)

in which

A) Z is a benzophenonetetracarboxylic dianhydride radical and

B) based on the diamine radicals, 10-30 mol% of the units Z′ have the formula

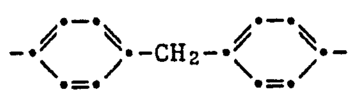 and

C) 90-70 mol% of the units Z′

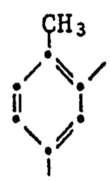 or 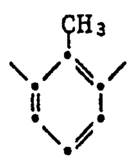

or mixtures thereof.

14. A coating agent according to claim 1, which contains 99.9 to 20 % by weight of polyimide (b) and 0.1 to 20 % by weight of bisazide (c), based on the components (b) and (c).

15. A coating agent according to claim 1, wherein the solvent is a polar aprotic solvent.

16. A coating agent according to claim I, wherein the chromophoric polyazide is a diazide of the formula

$N_3$-E-$(Y)_q$-E-$N_3$

in which E is an aromatic hydrocarbon radical, q is 0 or 1 and Y is a group which forms a mesomeric system together with the aromatic hydrocarbon radicals E.

17. A coating agent according to claim 16, wherein Y is O, CO, S, SO, $SO_2$, NR′, in which R′ is hydrogen, alkyl, cycloalkyl, aryl or aralkyl,

$-(HC=CH)_p-\overset{O}{\overset{\|}{C}}-(CH=CH)_p-$, $-\overset{O}{\overset{\|}{C}}-(CH=CH)_p-$ or $-(CH=CH)_p-$

with p = 1-3, $-CH=N-$,

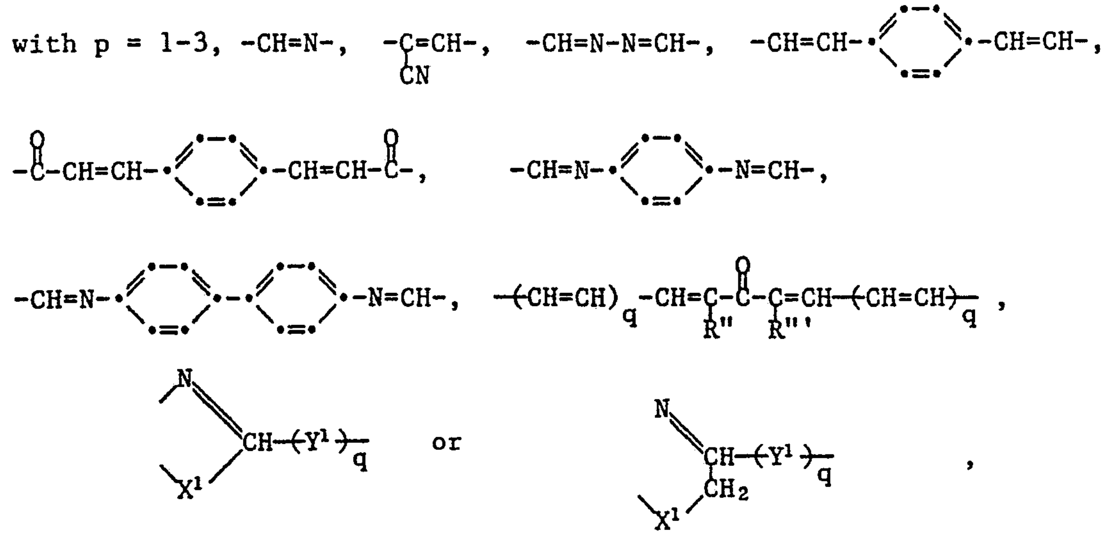

or

,

in which R″ and R‴ independently of each other are alkyl having 1 to 5 C atoms or R″ and R‴ together are ethylene or trimethylene, each unsubstituted or substituted by alkyl, hydroxyalkyl, alkoxy, trialkylsilyl, hydroxyl, carboxyl, alkoxycarbonyl, amino, alkylamino, or dialkylamino, q is 0 or 1, $X^1$ is O, S or NH, each $Y^1$ independently has the same meaning as Y, and the free bonds on N and $X_1$ form a fused heterocyclic ring together with the group E.

18. A coating agent according to claims 5 and 7, wherein the polyazide is 2,6-bis((4-p-azidophenyl)-methine)-cyclohexan-1-one.

19. A photographic recording material for relief images which consists of a substrate and a radiation-sensitive layer, said radiation-sensitive layer being a mixture of polyimide (b) and polyazide (c) according to claim 1.

20. Use of a coating agent according to claim 1, for applying insulating or protective coatings and for preparing printed circuits and integrated circuits.

**Revendications**

1. Produit d'enduction photosensible qui, en plus d'additifs usuels, contient (a) un solvant organique, (b) un homo- ou co-polyimide soluble dans ce solvant et dérivant d'acides tétarcarboxyliques aromatiques et de diamines aromatiques ou de diamines aromatiques et aliphatiques, au moins un groupe aliphatique étant uni directement ou par l'intermédiaire d'un groupe formant pont à au moins une partie des radicaux d'acides tétracarboxyliques, des radicaux de diamines aromatiques ou des deux types de radicaux, et/ou au moins une partie de ces radicaux contenant, comme groupe aliphatique formant pont, un radical alkylène, alkylidène, cycloalkylidène ou $Si(Alkyl)_2$, et (c) au moins 0,1 % en poids, par rapport à la composante (b), d'au moins un polyazide chromophore organique dans lequel les radicaux azido sont liés à des radicaux hydrocarbonés aromatiques.

2. Produit de revêtement selon la revendication 1 caractérisé en ce que les radicaux à groupes aliphatiques et/ou à ponts aliphatiques sont contenus en une proportion d'au moins 10 % en moles dans le polyimide ou le copolyimide, par rapport au polyimide.

3. Produit de revêtement selon la revendication 1 caractérisé en ce que le groupe aliphatique est un radical alkyl-Q- dont la partie alkyle contient de 1 à 6 atomes de carbone et dont le symbole Q représente une liaison directe, -O-, -S-, -SO-, $-SO_2-$, -CO-, -NH-, un radical -N(Alkyl) contenant de 1 à 6 atomes de carbone ou un radical -NHCO-, et le groupe formant pont est, en tant qu'alkylène, un radical méthylène ou éthylène, en tant qu'alkylidène un radical éthylidène, propylidène-1,1 ou -2,2 ou butylidène-1,1 ou -2,2, en tant que cycloalkylidène un radical cyclopentylidène ou cyclohexylidène, et en tant que $Si(Alkyl)_2$ un radical $Si(méthyl)_2$ ou $Si(éthyl)_2$.

4. Produit de revêtement selon la revendication 3 caractérisé en ce que le groupe aliphatique est un radical méthyle ou méthoxy et le groupe formant pont est un radical méthylène, propylidène-2,2 ou $Si(méthyl)_2$.

5. Produit de revêtement selon la revendication 1 caractérisé en ce que l'homopolyimide ou le copolyimide

(b) est essentiellement constitué d'unités structurales répétées répondant à la formule I:

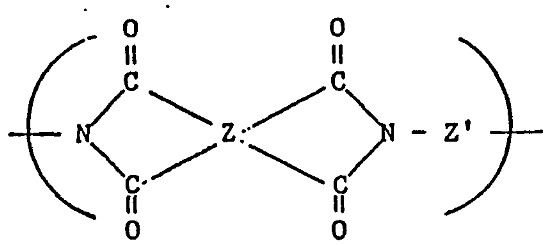

(I)

dans laquelle:

les 4 radicaux carbonyles sont liés à des atomes de carbone différents et les 2 radicaux carbonyles de chacune des paires de radicaux carbonyles sont en ortho ou en péri l'un par rapport à l'autre,

Z représente un radical quadrivalent contenant au moins un cycle aromatique et

Z' représente un radical organique bivalent pris dans l'ensemble constitué par les radicaux aromatiques, alkylaromatiques, aliphatiques, cycloaliphatiques et hétérocycliques, les associations de ceux-ci et les restes avec des ponts contenant de l'oxygène, du soufre, de l'azote, du silicium ou du phosphore,

avec la condition que:

1) sur le nombre total des motifs polyimidiques répétés:

A) le symbole Z représente, dans 0 à 100 % en moles de ces motifs, un radical de phénylindane répondant à la formule II:

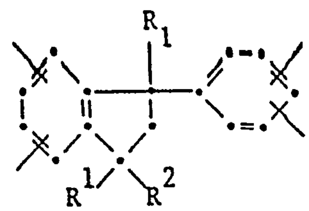

(II)

dans laquelle $R_1$ représente l'hydrogène ou un alkyle contenant de 1 à 5 atomes de carbone et $R_2$ représente un alkyle contenant de 1 à 5 atomes de carbone, et

B) Z' représente, dans 0 à 100 % en moles de ces motifs, un radical de phénylindane répondant à la formule III:

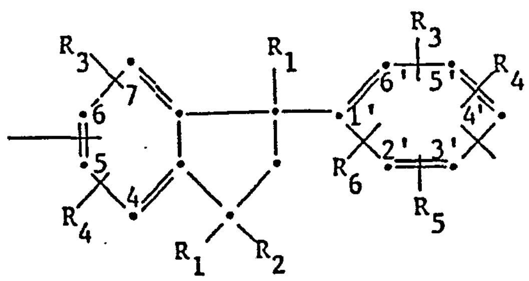

(III)

dans laquelle $R_1$ représente l'hydrogène ou un alkyle contenant de 1 à 5 atomes de carbone, $R_2$ représente un alkyle contenant de 1 à 5 atomes de carbone, et $R_3$, $R_4$, $R_5$ et $R_6$ représentent chacun, indépendamment les une des autres, l'hydrogène, un halogène, un alcoxy ou un alkyle contenant de 1 à 4 atomes de carbone, et

2) sur le nombre total des radicaux Z et Z', au moins 10 % en moles, par rapport aux composantes isolées, sont des radicaux de phénylindane.

6. Produit de revêtement selon la revendication 5 caractérisé en ce que le symbole $R_2$, dans les formules II et III, est un radical méthyle.

7. Produit de revêtement selon la revendication 5 caractérisé en ce que, dans le polyimide, de 0 à 100 % en moles des radicaux Z répondent à l'une des formules:

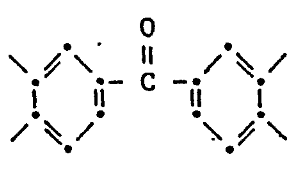

et

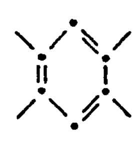

tandis que de 100 à 0 % en moles des radicaux Z sont formés d'un mélange des radicaux:

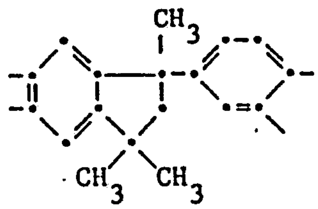

et

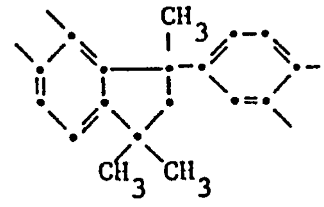

et en ce que de 100 à 10 % en moles des radicaux Z, représentent un radical de formule III dans lequel $R_1$, $R_3$, $R_4$, $R_5$ et $R_6$ représentent chacun, indépendamment les uns des autres, l'hydrogène ou un méthyle et $R_2$ représente un méthyle, tandis que de 0 à 90 % en moles des radicaux Z' répondent à l'une des formules:

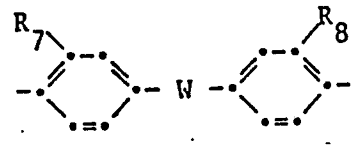

et

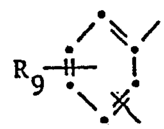

dans lesquelles W représente une liaison covalente, un radical méthylène, éthylidène, propylidène-2,2 ou cyclohexylidène, le soufre, l'oxygène ou un radical sulfonyle, $R_7$ et $R_8$ représentent chacun, indépendamment l'un de l'autre, l'hydrogène, un halogène ou un radical alcoxy ou alkyle contenant de 1 à 5 atomes de carbone et $R_9$ représente l'hydrogène, un halogène ou un radical alcoxy ou alkyle contenant de 1 à 5 atomes de carbone.

8. Produit de revêtement selon la revendication 5 caractérisé en ce que, dans les polyimides, le symbole Z' représente l'un des radicaux suivants:

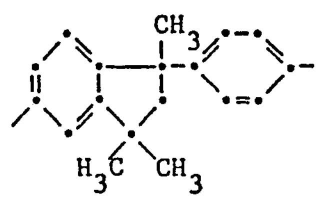

et

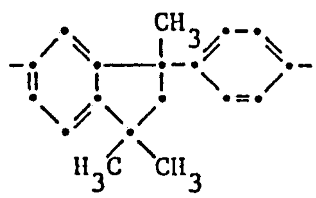

ou un mélange de ceux-ci et le symbole Z représente l'un des radicaux:

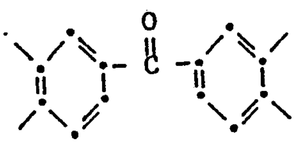

et

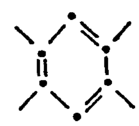

ou un mélange de ceux-ci.

9. Produit de revêtement selon la revendication 1 caractérisé en ce que l'homopolyimide ou le copolyimide (b) est essentiellement constitué d'unités structurales répétées répondant à la formule I:

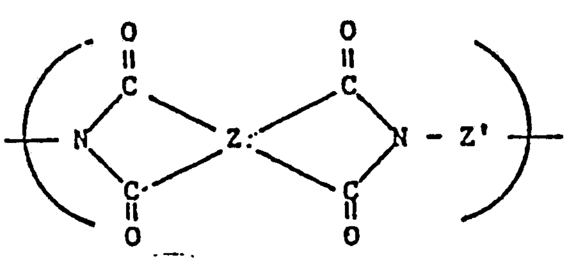

(I)

dans laquelle:

les 4 radicaux carbonyles sont portés par des atomes de carbone différents et les 2 radicaux carbonyles dans chacun des 2 couples sont en position ortho ou en position péri l'un par rapport à l'autre,

Z représente un radical quadrivalent qui contient au moins un cycle aromatique et

Z' représente un radical organique bivalent pris parmi les radicaux aromatiques, alkylaromatiques,

aliphatiques, cycloaliphatiques et hétérocycliques, les associations de ceux-ci et les radicaux qui comportent des groupes ponts contenant de l'oxygène, du soufre, de l'azote, du silicium ou du phosphore,

avec la condition que, sur l'ensemble des motifs polyimidiques répétés et par rapport respectivement aux radicaux d'anhydrides d'acides tétracarboxyliques et aux radicaux de diamines:

A) de 30 à 100 % en moles de ces motifs Z soient des radicaux d'acides benzophénonetétracarboxyliques et

B) de 30 à 100 % en moles de ces motifs Z' soient des radicaux répondant à l'une des formules:

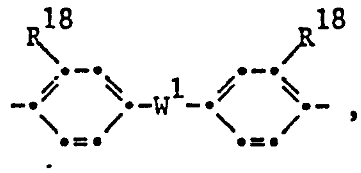

,

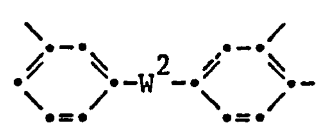

et

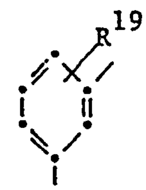

dans lesquelles:

$W^1$ représente $CH_2$, O, S, $SO_2$, CO ou $H_3C-C-CH_3$,

$W^2$ représente $CH_2$, S, $SO_2$, CO ou $H_3C-C-CH_3$,

$R^{18}$ représente un radical alkyle ou alcoxy contenant de 1 à 6 atomes de carbone, un halogène, en particulier Cl, ou un radical $CO_2H$, OH, $SO_3H$ ou $NHCOCH_3$ et

$R^{19}$ représente un alkyle contenant de 1 à 6 atomes de carbone,

au moins 10 % en moles de ces radicaux renfermant des groupes $CH_2$,

$H_3C-C-CH_3$,

alkyles, alcoxy ou $NHCOCH_3$.

10. Produit de revêtement selon la revendication 9 caractérisé en ce que $R^{18}$ et $R^{19}$ représentent chacun un radical méthyle.

11. Produit de revêtement selon la revendication 9 caractérisé en ce que $W^1$ et $W^2$ représentent chacun un radical $CH_2$.

12. Produit de revêtement selon la revendication 1 caractérisé en ce que l'homopolyimide ou le copolyimide est essentiellement constitué d'unités structurales répétées répondant à la formule I:

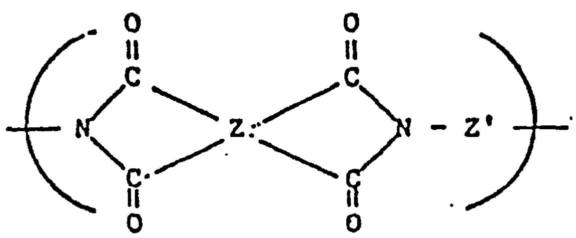

(I)

dans laquelle, par rapport respectivement aux radicaux d'anhydrides d'acides tétracarboxyliques et aux radicaux de diamines,

A) de 75 à 100 % en moles des motifs Z sont des radicaux d'anhydride pyromellitique et

B) de 25 à 0 % en moles des motifs Z répondent à la formule:

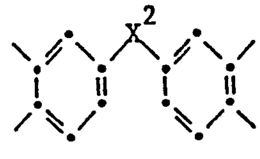

dans laquelle $X^2$ représente O, $SO_2$ ou, mieux, CO, tandis que:

C) de 10 à 35 % en moles des motifs Z' répondent à la formule:

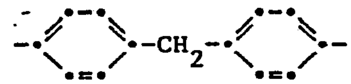

et de 90 à 65 % en moles des motifs Z' sont des radicaux répondant à l'une des formules suivantes:

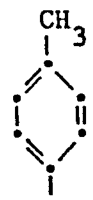

et

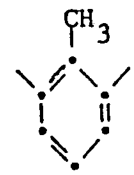

ou des mélanges de ceux-ci.

13. Produit de revêtement selon la revendication 1 caractérisé en ce que le copolyimide (b) est essentiellement constitué d'unités structurales répétées répondant à la formule I:

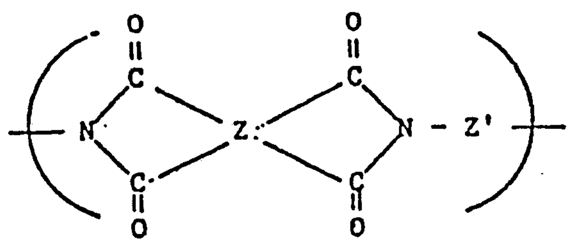

(I)

dans laquelle:

A) Z représente un radical de dianhydride d'acide benzophénone-tétracarboxylique

et, par rapport aux radicaux de diamines,

B) de 10 à 30 % en moles des motifs Z' répondent à la formule:

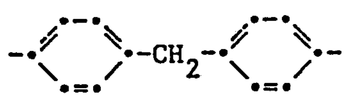

et

C) de 90 à 70 % en moles des motifs Z' sont des radicaux répondant à l'une des formules:

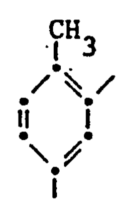

et

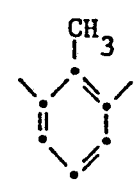

ou des mélanges de ceux-ci.

14. Produit de revêtement selon la revendication 1 caractérisé en ce qu'il contient de 99,9 à 20 % en poids du polyimide (b) et de 0,1 à 20 % en poids du bis-azide (c), par rapport aux constituants (b) et (c).

15. Produit de revêtement selon la revendication 1 caractérisé en ce que le solvant est un solvant aprotique polaire.

16. Produit de revêtement selon la revendication 1 caractérisé en ce que le polyazide chromophore est un bis-azide répondant à la formule:

$N_3$-E-$(Y)_q$ -E-$N_3$

dans laquelle E représente un radical hydrocarboné aromatique, q est égal à 0 ou à 1 et Y représente un radical formant un système mésomère avec les radicaux aromatiques E.

17. Produit de revêtement selon la revendication 16 dans lequel Y représente O, CO, S, SO ou $SO_2$, un radical NR' (dont le symbole R' représente l'hydrogène ou un radical alkyle, cycloalkyle, aryle ou aralkyle), l'un des radicaux

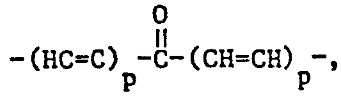, 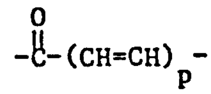 et $-(CH=CH)_p-$

dans lesquels p désigne un nombre de 1 à 3,
un radical

$-CH=N-$, 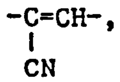, $-CH=N-N=CH-$, 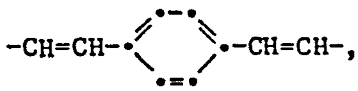

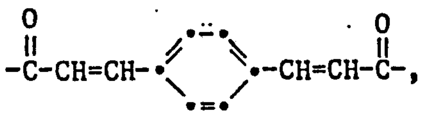 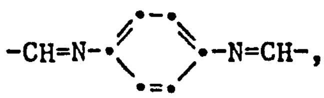

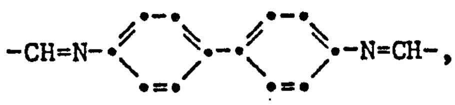

ou l'un des radicaux

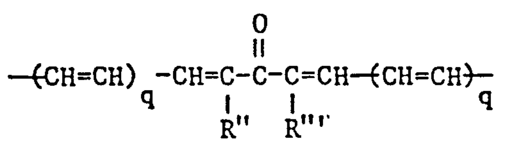

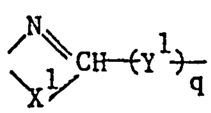 et 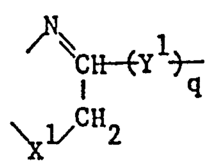 ,

dans lesquels R'' et R''' représentent chacun, indépendamment l'un de l'autre, un alkyle en $C_1$-$C_5$ ou forment ensemble un radical éthylène ou triméthylène non substitué ou porteur d'un alkyle, d'un hydroxyalkyle, d'un alcoxy, d'un trialkylsilyle, d'un hydroxy, d'un carboxy, d'un alcoxycarbonyle, d'un amino, d'un alkylamino ou d'un dialkylamino, q est égal à 0 ou à 1, $X^1$ représente O, S ou NH, $Y^1$ a l'une des significations qui ont été données pour Y mais indépendamment de ce dernier, et les liaisons libres partant de N et de $X_1$ forment, avec le radical E, un noyau hétérocyclique condensé.

18. Produit de revêtement selon l'une des revendications 5 et 7, caractérisé en ce que le polyazide est la bis-(azido-4 benzylidène)-2,6 cyclohexanone-1.

19. Matière d'enregistrement photographique pour représentations en relief, constituée d'un support et d'une couche photosensible, matière sur laquelle on a appliqué, comme couche photosensible, un mélange du polyimide (b) et du polyazide (c) selon la revendication 1.

20. Application de produits de revêtement selon la revendication 1 pour l'application de vernis isolants et protecteurs et pour la fabrication de circuits imprimés et de circuits intégrés.